# EUROPÄISCHE PATENTSCHRIFT

(11) **EP 4 247 609 B1**
(45) Veröffentlichungstag und Bekanntmachung des Hinweises auf die Patenterteilung: **26.03.2025**
(21) Anmeldenummer: 21819739.0
(22) Anmeldetag: 22.11.2021
(51) Int. Cl.: B29C 44/02, B29C 44/50, B29C 48/00, B29C 64/00

(54) **VORRICHTUNG ZUR EXTRUSIONSBASIERTEN HERSTELLUNG EINES GESCHÄUMTEN DREIDIMENSIONALEN OBJEKTS**
DEVICE FOR THE EXTRUSION BASED MANUFACTURE OF A FOAMED THREE-DIMENSIONAL OBJECT
DISPOSITIF POUR LA FABRICATION PAR EXTRUSION D'UN OBJET TRIDIMENSIONNEL EN MOUSSE

(30) Priorität: 23.11.2020 DE 102020130955
(43) Veröffentlichungstag der Anmeldung: 27.09.2023
(73) Patentinhaber: Hans Weber Maschinenfabrik GmbH, 96317 Kronach (DE)
(72) Erfinder: HAMBERGER, Mario, 84066 Mallersdorf-Pfaffenberg (DE); MERILLET, Philippe-Daniel, 1040 Etterbeek Brussels (BE)
(74) Vertreter: Hafner & Kohl PartmbB
(86) Internationale Anmeldenummer: PCT/EP2021/082502
(87) Internationale Veröffentlichungsnummer: WO 2022/106687

(56) Entgegenhaltungen:
- EP-A1- 3 378 619
- EP-A1- 3 616 874
- WO-A1-2020/084253
- CN-A- 110 193 931
- US-A- 5 975 493
- US-A1- 2017 217 088
- US-A1- 2018 281 295
- US-A1- 2019 039 299

## Beschreibung

Die Erfindung betrifft eine Vorrichtung zur extrusionsbasierten Herstellung wenigstens eines zumindest abschnittsweise, gegebenenfalls vollständig, geschäumten dreidimensionalen Objekts, welche eine Extrusionseinrichtung, welche zum Aufschmelzen eines schäumbaren Extrusionsmaterials eingerichtet ist, umfasst.

Entsprechende Vorrichtungen zur extrusionsbasierten Herstellung zumindest abschnittsweise geschäumter dreidimensionaler Objekte, mithin von zumindest abschnittsweise als Schaumkörper mit einer durch einen Schäumvorgang eines schäumbaren Extrusionsmaterials herbeigeführten Schaumstruktur vorliegender Objekte, sind aus dem Stand der Technik dem Grunde nach bekannt. Beispielsweise ist in der deutschen Patentanmeldung DE 10 2017 105 231 A1 eine Vorrichtung zum computergestützten Erzeugen dreidimensionaler Schaumstrukturen aus einem Gemisch aus Polymerwerkstoff und Treibmittel beschrieben, welche eine Extrusionseinheit aufweist, vermittels welcher das Gemisch auf eine Druckunterlage extrudierbar ist. EP 3 378 619 A1 offenbart ein Vorrichtung wie im Oberbegriff von Anspruch 1.

Im Hinblick auf die stetig wachsenden Anforderungen an entsprechende geschäumte dreidimensionale Objekte, d. h. insbesondere Qualitätsanforderungen an die realisierbaren Schaumstrukturen, etwa im Hinblick auf möglichst konstante Schäumgrade, besteht ein Bedarf nach einer weiter verbesserten Vorrichtung zur extrusionsbasierten Herstellung wenigstens eines zumindest abschnittsweise geschäumten dreidimensionalen Objekts.

Insbesondere besteht ein Bedarf nach einer entsprechenden Vorrichtung, welche auf praktikable und zuverlässige Weise eine Herstellung entsprechender zumindest abschnittsweise geschäumter dreidimensionaler Objekte mit einem kontrollierbaren Aufschäumverhalten eines vermittels der Extrusionseinrichtung aufgeschmolzenen schäumbaren Extrusionsmaterials ermöglicht.

Der Erfindung liegt die Aufgabe zugrunde, eine verbesserte Vorrichtung zur extrusionsbasierten Herstellung wenigstens eines zumindest abschnittsweise geschäumten dreidimensionalen Objekts anzugeben.

Die Aufgabe wird durch eine Vorrichtung zur extrusionsbasierten Herstellung wenigstens eines zumindest abschnittsweise geschäumten dreidimensionalen Objekts gemäß Anspruch 1 gelöst. Die hierzu abhängigen Ansprüche betreffen mögliche Ausführungsformen der Vorrichtung.

Ein erster Aspekt der Erfindung betrifft eine Vorrichtung zur extrusionsbasierten Herstellung wenigstens eines zumindest abschnittsweise, gegebenenfalls vollständig, geschäumten dreidimensionalen Objekts. Die Vorrichtung ist sonach eingerichtet, extrusionsbasiert zumindest abschnittsweise, gegebenenfalls vollständig, geschäumte dreidimensionale Objekte herzustellen.

Unter dem Begriff "Objekt" kann jedweder dreidimensionale Gegenstand oder jedweder Abschnitt eines dreidimensionalen Gegenstands verstanden werden. Ein dreidimensionaler Gegenstand kann z. B. ein technisches Bauelement oder eine technische Bauelementgruppe sein. Ein Abschnitt eines dreidimensionalen Gegenstands kann demnach ein Abschnitt eines technischen Bauelements oder ein Abschnitt einer technischen Bauelementgruppe sein.

Wie erwähnt, ist die Vorrichtung zur extrusionsbasierten Herstellung wenigstens eines zumindest abschnittsweise, gegebenenfalls vollständig, geschäumten dreidimensionalen Objekts eingerichtet. Ein vermittels der Vorrichtung herstellbares bzw. hergestelltes dreidimensionales Objekt kann sonach zumindest abschnittsweise, gegebenenfalls vollständig, eine durch einen, z. B. chemischen und/oder physikalischen, Expansions- bzw. Schäumvorgang des Extrusionsmaterials herbeigeführte Expansions- bzw. Schaumstruktur - diese kann sich beispielsweise durch eine offen- oder geschlossenzellige Materialstruktur auszeichnen - aufweisen respektive mit einer solchen ausgebildet sein. Ein vermittels der Vorrichtung herstellbares bzw. hergestelltes dreidimensionales Objekt kann sonach zumindest abschnittsweise, gegebenenfalls vollständig, als ein aus einem zumindest teilweise expandierten bzw. geschäumten Extrusionsmaterial gebildeter Expansions- bzw. Schaumkörper bezeichnet bzw. erachtet werden. Wenn im Weiteren von einem "Objekt" die Rede ist, ist hierunter typischerweise ein zumindest abschnittsweise, gegebenenfalls vollständig, geschäumtes dreidimensionales Objekt zu verstehen.

Die Vorrichtung ist insbesondere zur extrusionsbasierten Herstellung wenigstens eines Objekts über einen zumindest abschnittsweisen, gegebenenfalls vollständigen, extrusionsbasierten lagen- bzw. schichtweisen Aufbau eines entsprechenden Objekts eingerichtet. Die extrusionsbasierte Herstellung eines entsprechenden Objekts kann vermittels der Vorrichtung sonach zumindest abschnittsweise, gegebenenfalls vollständig, lagen- bzw. schichtweise erfolgen. Die Vorrichtung ist entsprechend zur extrusionsbasierten Verarbeitung wenigstens eines Extrusionsmaterials, d. h. zur Extrusion wenigstens eines Extrusionsmaterials auf einen Untergrund, eingerichtet.

Unter einem Extrusionsmaterial ist typischerweise ein extrudierbares bzw. extrusionsfähiges und, z. B. chemisch und/oder physikalisch, expandierbares bzw. schäumbares Kunststoffmaterial zu verstehen.

Ein entsprechendes Kunststoffmaterial - insbesondere kommen thermoplastische Kunststoffmaterialien in Betracht - kann sonach mit einem einen Expansions- bzw. Schäumvorgang des Kunststoffmaterials herbeiführenden Treibmittel, d. h. insbesondere mit einem chemischen und/oder physikalischen Treibmittel, versehen sein bzw. im Rahmen der Verarbeitung vermittels der Vorrichtung mit einem Treibmittel versehen werden.

Der Begriff "Kunststoffmaterial" kann auch Mischungen wenigstens zweier sich in wenigstens einem chemischen und/oder physikalischen Parameter unterscheidender Kunststoffmaterialien beinhalten bzw. betreffen.

Ein entsprechendes Treibmittel kann z. B. in Form einer Flüssigkeit, eines Gases oder eines Feststoffs vorliegen. Bei einem entsprechenden Feststoff kann es sich z. B. um ein granulatartiges bzw. -förmiges respektive pulverartiges bzw. -förmiges Material handeln. Insbesondere kann es sich um ein granulatartiges bzw. -förmiges respektive pulverartiges bzw. -förmiges Material handeln, welches unter bestimmten chemischen und/oder physikalischen Bedingungen, d. h. z. B. ober- oder unterhalb einer bestimmten Temperatur, zerfällt, wodurch ein Expansions- bzw. Schäumvorgang des Kunststoffmaterials herbeigeführt wird.

Der Begriff "Treibmittel" kann auch Mischungen wenigstens zweier sich in wenigstens einem chemischen und/oder physikalischen Parameter unterscheidender unterschiedlicher Treibmittel beinhalten bzw. betreffen.

Es wurde erwähnt, dass das Kunststoffmaterial (erst) im Rahmen der Verarbeitung vermittels der Vorrichtung mit einem Treibmittel versehen werden kann. Es ist sonach möglich, dass die Vorrichtung wenigstens eine Treibmittelzuführeinrichtung umfasst, über welche wenigstens ein Treibmittel, d. h. insbesondere eine bestimmte Menge bzw. Konzentration eines bestimmten Treibmittels, zu einem vermittels der Vorrichtung verarbeiteten Kunststoffmaterial zuführbar ist. Derart können expandierbare bzw. schäumbare Gemische aus wenigstens einem Kunststoffmaterial und wenigstens einem Treibmittel im Rahmen des Aufschmelzens eines Kunststoffmaterials erzeugt werden. Entsprechende Gemische können ebenso als Extrusionsmaterialien erachtet werden.

Eine entsprechende Treibmittelzuführeinrichtung kann z. B. einer im Weiteren näher erläuterten Extrusionseinrichtung und/oder einer im Weiteren näher erläuterten Austragseinrichtung als jeweilige Bestandteile der Vorrichtung zugeordnet sein bzw. einen Bestandteil einer solchen bilden. Eine entsprechende Treibmittelzuführeinrichtung kann z. B. als mit einer entsprechenden Extrusionseinrichtung bzw. einer entsprechenden Austragseinrichtung koppelbarer bzw. gekoppelter Zuführtrichter ausgebildet sein. Ebenso ist es möglich, dass eine Treibmittelzuführeinrichtung z. B. als mit einer entsprechenden Extrusionseinrichtung bzw. einer entsprechenden Austragseinrichtung koppelbare bzw. gekoppelte Fördereinrichtung ausgebildet ist. Eine entsprechende, z. B. als zur Erzeugung einer Förderströmung ausgebildete Strömungserzeugungseinrichtung ausgebildete, Fördereinrichtung kann durch die Einstellung einstellbarer Förderparameter, wie z. B. der Fördergeschwindigkeit bzw. - menge, eine, gegebenenfalls gezielt variierbare, Zuführung von Treibmittel zu einem vermittels der Vorrichtung verarbeiteten Kunststoffmaterial, d. h. insbesondere zu einem vermittels einer Extrusionseinrichtung der Vorrichtung aufgeschmolzenen Kunststoffmaterial, ermöglichen.

Die Vorrichtung umfasst eine Extrusionseinrichtung, welche zum Aufschmelzen bzw. Plastifizieren eines Extrusions- bzw. Kunststoffmaterials eingerichtet ist. Eine entsprechende Extrusionseinrichtung umfasst typischerweise wenigstens eine gegebenenfalls auch als Extruderzylinder zu bezeichnende bzw. zu erachtende Extruderkammer sowie wenigstens eine in der Extruderkammer angeordnete, eine Extruderachse definierende Extruderschnecke. Die Extruderkammer umfasst typischerweise eine oder mehrere die Extruderkammer begrenzende bzw. definierende Extruderkammerwandungen. Die Extruderkammer kann unterschiedlich funktionalisierte Bereiche bzw. Zonen, wie z. B. einen, z. B. trichterartigen bzw. -förmigen, Befüllbereich, über welchen ein Befüllen der Extruderkammer mit aufzuschmelzendem Extrusions- bzw. Kunststoffmaterial erfolgt, einen Aufschmelzbereich, in welchem das Aufschmelzen des in die Extruderkammer gefüllten aufzuschmelzenden Extrusions- bzw. Kunststoffmaterials erfolgt, sowie einen Ausströmbereich, über welchen aufgeschmolzenes Extrusions- bzw. Kunststoffmaterial aus der Extruderkammer ausströmen kann, aufweisen.

Die Extrusionseinrichtung kann in wenigstens einem Bewegungsfreiheitsgrad relativ zu dem bzw. einem Untergrund bewegbar gelagert sein. Zur Realisierung von Bewegungen der Extrusionseinrichtung kann die Vorrichtung eine Antriebseinrichtung und/oder eine Führungseinrichtung umfassen. Eine entsprechende, z. B. als Antriebsmotor implementierte, Antriebseinrichtung ist typischerweise zur Erzeugung von die Extrusionseinrichtung in eine Bewegung entlang einer translatorischen und/oder rotatorischen Bewegungsbahn versetzenden Antriebskraft eingerichtet. Eine entsprechende, z. B. als Führungsschiene implementierte, Führungseinrichtung ist typischerweise zur Bestimmung entsprechender Bewegungsbahnen eingerichtet. Einer entsprechenden Antriebs- und/oder Führungseinrichtung kann eine Steuereinrichtung zugeordnet sein, welche zur Erzeugung von den Betrieb der Antriebs- bzw. Führungseinrichtung steuernden Daten eingerichtet ist, über welche sich ein- oder mehrdimensionale Bewegungsbahnen der Extrusionseinrichtung realisieren lassen.

Die Vorrichtung umfasst weiterhin eine der Extrusionseinrichtung nachgeschaltet angeordnete oder ausgebildete Austragseinrichtung, welche zum Austragen bzw. Aufbringen eines vermittels der Extrusionseinrichtung aufgeschmolzenen, schäumbaren oder zumindest teilweise geschäumten Extrusionsmaterials auf einen Untergrund eingerichtet ist. Die Austragseinrichtung ist sonach eingerichtet, ein aufgeschmolzenes, schäumbares oder zumindest teilweise geschäumtes Extrusionsmaterial, insbesondere bahnförmig bzw. -strangförmig, kontinuierlich oder quasi-kontinuierlich, d. h. z. B. in einer kontinuierlichen oder quasi-kontinuierlichen Material- bzw. Schmelzebahn bzw. in einem kontinuierlichen oder quasi-kontinuierlichen Material- bzw. Schmelzestrang, auf einen Untergrund auszutragen bzw. aufzubringen. Eine entsprechende Austragseinrichtung umfasst hierfür typischerweise wenigstens eine, insbesondere düsenartige bzw. - förmige, Ausströmöffnung, über welche Extrusionsmaterial auf einen Untergrund austragbar bzw. aufbringbar ist. Eine entsprechende Ausströmöffnung kann gegebenenfalls in ihrer Querschnittsgeometrie variierbar sein.

Die Austragseinrichtung stellt typischerweise eine zu der Extrusionseinrichtung bzw. - kammer gesonderte Bau- bzw. Funktionseinheit der Vorrichtung dar.

Bei einem Untergrund kann es sich z. B. um eine Bauplattform oder um eine bereits auf einen Untergrund aufgebrachte Lage bzw. Schicht des oder eines Extrusionsmaterials, worunter gegebenenfalls auch nur eine einzelne Materialbahn bzw. ein einzelner Materialstrang des oder eines Extrusionsmaterials zu verstehen sein kann, handeln.

Aus vorstehenden Ausführungen ergibt sich, dass die Extrusionseinrichtung und die Austragseinrichtung typischerweise strömungstechnisch miteinander verbindbar bzw. verbunden sind, insbesondere derart, dass vermittels der Extrusionseinrichtung aufgeschmolzenes Extrusionsmaterial von der Extrusionseinrichtung in die Austragseinrichtung strömen kann, um über die Austragseinrichtung auf einen Untergrund ausgetragen bzw. aufgebracht werden zu können. Die Extrusionseinrichtung, d. h. insbesondere die Extruderkammer, umfasst sonach typischerweise wenigstens eine, z. B. düsenartige bzw. -förmige, Ausströmöffnung im Sinne eines Ausgangs, über welche(n) aufgeschmolzenes Extrusions- bzw. Kunststoffmaterial aus der Extrusionseinrichtung in die bzw. in Richtung der Austragseinrichtung ausströmen kann. Die Austragseinrichtung umfasst entsprechend typischerweise wenigstens eine, z. B. düsenartige bzw. -förmige, Einströmöffnung im Sinne eines Eingangs, über welche(n) aufgeschmolzenes Extrusions- bzw. Kunststoffmaterial aus der Extrusionseinrichtung in die Austragseinrichtung einströmen kann.

Wie erwähnt, umfasst die Austragseinrichtung zudem gemäß der Erfindung wenigstens eine, z. B. düsenartige bzw. -förmige, Ausströmöffnung im Sinne eines Ausgangs, über welche aufgeschmolzenes Extrusionsmaterial aus der Austragseinrichtung ausströmen und somit auf einen Untergrund ausgetragen bzw. aufgebracht werden kann.

Wesentlich ist, dass die Austragseinrichtung zur Einstellung bzw. Veränderung wenigstens eines das Aufschäumverhalten eines vermittels der Austragseinrichtung auf einen Untergrund auszutragenden bzw. aufzubringenden schäumbaren oder zumindest teilweise geschäumten Extrusionsmaterials beeinflussenden Parameters eingerichtet ist. Vermittels der Austragseinrichtung lässt sich sonach wenigstens ein Parameter einstellen bzw. verändern, welcher das Aufschäumverhalten eines vermittels der Extrusionseinrichtung aufgeschmolzenen, auf einen Untergrund aufzutragenden schäumbaren oder zumindest teilweise geschäumten Extrusionsmaterials beeinflusst.

Die Eigenschaften eines vermittels der Vorrichtung herstellbaren Objekts lassen sich sonach über die vermittels der Austragseinrichtung mögliche Einstellung bzw. Veränderung entsprechender Parameter gezielt einstellen bzw. verändern, als sich das für die Eigenschaften des herzustellenden Objekts bedeutsame Aufschäumverhalten des Extrusionsmaterials gezielt, insbesondere örtlich und/oder zeitlich, einstellen bzw. verändern lässt. Insbesondere lassen sich Abmessungen und/oder Volumen einer vermittels der Austragseinrichtung auf einen Untergrund austragbaren bzw. aufbringbaren respektive ausgetragenen bzw. aufgebrachten Material- bzw. Schmelzebahn gezielt, insbesondere örtlich und/oder zeitlich, einstellen bzw. verändern, sodass sich Objekte mit innerhalb einer Objektebene bzw. -lage und/oder zwischen mehreren Objektebenen bzw. -lagen lokal unterschiedlichen Eigenschaften realisieren lassen.

Insgesamt liegt damit eine verbesserte Vorrichtung zur extrusionsbasierten Herstellung wenigstens eines zumindest abschnittsweise, gegebenenfalls vollständig, geschäumten dreidimensionalen Objekts vor.

Die Austragseinrichtung kann insbesondere eingerichtet sein, wenigstens einen das Aufschäumverhalten eines vermittels der Austragseinrichtung auf einen Untergrund auszutragenden bzw. aufzubringenden schäumbaren oder zumindest teilweise geschäumten Extrusionsmaterials beeinflussenden Parameters kontinuierlich oder diskontinuierlich einzustellen bzw. zu verändern. Mithin kann eine kontinuierliche oder diskontinuierlich veränderliche Einstellung bzw. Veränderung des Aufschäumverhaltens und daraus resultierend der Eigenschaften eines herzustellenden Objekts möglich sein, sodass sich Objekte mit innerhalb einer Objektebene bzw. -lage und/oder zwischen mehreren Objektebenen bzw. -lagen lokal unterschiedlichen Eigenschaften realisieren lassen.

Nachfolgend werden in nicht abschließender Weise Beispiele für vermittels der Austragseinrichtung einstellbare bzw. veränderliche Parameter gegeben:
Die Austragseinrichtung ist eingerichtet , einen die Austragsgeschwindigkeit oder -menge des auf einen Untergrund aufzutragenden schäumbaren oder zumindest teilweise geschäumten Extrusionsmaterials beeinflussenden Parameters einzustellen bzw. zu verändern. Ein entsprechender Parameter kann konkret z. B. die Austragsgeschwindigkeit oder die Austragsmenge des auf einen Untergrund aufzutragenden schäumbaren oder zumindest teilweise geschäumten Extrusionsmaterials sein. Durch eine gezielte Einstellung bzw. Veränderung der Austragsgeschwindigkeit bzw. -menge kann das Aufschäumverhalten gezielt beeinflusst bzw. gesteuert werden. Insbesondere kann das Aufschäumverhalten durch eine Veränderung der Austragsgeschwindigkeit oder -menge für eine gegebene Treibmittelkonzentration gezielt beeinflusst bzw. gesteuert werden. Beispielsweise kann bei Erhöhung der Austragsgeschwindigkeit oder -menge bei unveränderlicher Treibmittelkonzentration das Aufschäumverhalten bzw. das tatsächlich aufgeschäumte Objektvolumen (zeitweise) verringert werden, weil pro ausgetragenem Materialvolumen weniger Treibmittel vorhanden ist. Entsprechend kann bei Erniedrigung der Austragsgeschwindigkeit oder -menge bei unveränderlicher Treibmittelkonzentration das Aufschäumverhalten bzw. das tatsächlich aufgeschäumte Objektvolumen (zeitweise) erhöht werden, weil pro ausgetragenem Materialvolumen mehr Treibmittel vorhanden ist.

Die Austragseinrichtung ist hierfür als eine in wenigstens einem Förderparameter, insbesondere der Fördergeschwindigkeit bzw. -menge, variierbare Fördereinrichtung ausgebildetoder umfasst eine solche. Mithin ist es möglich, die Austragsgeschwindigkeit oder -menge des Extrusionsmaterials vermittels der Austragseinrichtung, insbesondere unabhängig von der Extrusionseinrichtung, gezielt zu beeinflussen. Eine entsprechende Fördereinrichtung ist als eine Pumpeneinrichtung, insbesondere eine Zahnradpumpeneinrichtung, ausgebildet oder umfasst eine solche. Über eine entsprechende Förder- bzw. Pumpeneinrichtung kann sich eine Zwangsförderung des Extrusionsmaterials aus der Extrusionseinrichtung realisieren lassen; eine entsprechende Förder- bzw. Pumpeneinrichtung kann sonach eingerichtet sein, eine Zwangsförderung des Extrusionsmaterials aus der Extrusionseinrichtung zu realisieren.

In diesem Zusammenhang ist nochmals auf die Möglichkeit, dass die Austragseinrichtung eine in ihrer Querschnittsgeometrie variierbare, gegebenenfalls düsenartige bzw. -förmige, Ausströmöffnung umfassen kann. Mithin kann auch über eine gezielte Änderung der Querschnittsgeometrie, d. h. insbesondere der Querschnittsfläche, der Ausströmöffnung, etwa durch Verstellen einer der Ausströmöffnung zugeordneten Blendeneinrichtung, die Austragsgeschwindigkeit oder - menge des Extrusionsmaterials eingestellt bzw. verändert werden.

Alternativ oder ergänzend kann die Austragseinrichtung eingerichtet sein, einen den Druck des auf einen Untergrund aufzutragenden schäumbaren oder zumindest teilweise geschäumten Extrusionsmaterials beeinflussenden Parameter einzustellen bzw. zu verändern. Ein entsprechender Parameter kann konkret z. B. der Druck des auf einen Untergrund aufzutragenden schäumbaren oder zumindest teilweise geschäumten Extrusionsmaterials sein. Durch eine gezielte Einstellung bzw. Veränderung des Drucks kann das Aufschäumverhalten gezielt beeinflusst bzw. gesteuert werden. Insbesondere kann das Aufschäumverhalten durch gezielte Einstellung bzw. Veränderung des Drucks für ein Treibmittel, welches z. B. einen bestimmten Druck (Grenzdruck) respektive die Über- oder Unterschreitung eines bestimmten Drucks (Grenzdrucks) zum Initiieren eines Schäumvorgangs erfordert, gezielt beeinflusst bzw. gesteuert werden. Beispielsweise kann bei Erhöhung des Drucks, insbesondere oberhalb einen entsprechenden Grenzdruck, das Aufschäumverhalten bzw. das tatsächlich aufgeschäumte Objektvolumen (zeitweise) verringert werden. Entsprechend kann bei Erniedrigung des Drucks, insbesondere unterhalb einen entsprechenden Grenzdruck, das Aufschäumverhalten bzw. das tatsächlich aufgeschäumte Objektvolumen (zeitweise) erhöht werden.

Die Austragseinrichtung kann hierfür eine in wenigstens einem Druckparameter, insbesondere des in das innerhalb der Austragseinrichtung befindliche Extrusionsmaterial wirkenden Drucks, variierbare Druckerzeugungseinrichtung ausgebildet sein oder eine solche umfassen. Mithin ist es möglich, den Druck des Extrusionsmaterials vermittels der Austragseinrichtung, insbesondere unabhängig von der Extrusionseinrichtung, gezielt zu beeinflussen. Eine entsprechende Druckerzeugungseinrichtung kann z. B. als die Querschnittsgeometrie einer Ausströmöffnung der Austragseinrichtung variabel beeinflussende Blendeneinrichtung ausgebildet sein oder eine solche umfassen.

Eine entsprechende Druckerzeugungseinrichtung kann insbesondere eingerichtet sein, für eine gegebene Austragsgeschwindigkeit oder -menge des Extrusionsmaterials ein bestimmtes Druckniveau innerhalb der Austragseinrichtung einzustellen. In Abhängigkeit des Druckniveaus kann ein Aufschäumgrad des Extrusionsmaterials innerhalb der Austragseinrichtung eingestellt werden, über welchen sich typischerweise Einfluss auf die Eigenschaften des aus der Austragseinrichtung austretenden Material- bzw. Schmelzestrangs nehmen lässt. Beispielsweise kann durch die Einstellung eines Druckniveaus unterhalb eines Grenzdrucks, welcher zum Initiieren eines Aufschäumvorgangs zu unterschreiten ist, ein zumindest teilweises Aufschäumen des Extrusionsmaterials innerhalb der Austragseinrichtung herbeigeführt werden, welches typischerweise in einem vergleichsweise flachen Material- bzw. Schmelzestrang resultiert, als das Extrusionsmaterial außerhalb der Austragseinrichtung nur noch teilweise aufschäumt. Entsprechend kann durch die Einstellung eines Druckniveaus oberhalb eines Grenzdrucks, welcher zum Initiieren eines Aufschäumvorgangs zu unterschreiten ist, ein zumindest teilweises Aufschäumen des Extrusionsmaterials innerhalb der Austragseinrichtung verhindert werden, was typischerweise in einem vergleichsweise hohen Material- bzw. Schmelzestrang resultiert, als das Extrusionsmaterial erst außerhalb der Austragseinrichtung aufschäumt.

Alternativ oder ergänzend kann die Austragseinrichtung eingerichtet sein, einen die Temperatur des auf einen Untergrund aufzutragenden schäumbaren oder zumindest teilweise geschäumten Extrusionsmaterials beeinflussenden Parameter einzustellen bzw. zu verändern. Ein entsprechender Parameter kann konkret z. B. die Temperatur des auf einen Untergrund aufzutragenden schäumbaren oder zumindest teilweise geschäumten Extrusionsmaterials sein. Durch eine gezielte Einstellung bzw. Veränderung der Temperatur kann das Aufschäumverhalten gezielt beeinflusst bzw. gesteuert werden. Insbesondere kann das Aufschäumverhalten durch gezielte Einstellung bzw. Veränderung der Temperatur für ein Treibmittel, welches z. B. eine bestimmte Aktivierungs- bzw. Grenztemperatur bzw. Wärmemenge zum Initiieren eines Schäumvorgangs erfordert, gezielt beeinflusst bzw. gesteuert werden. Beispielsweise kann bei Erhöhung der Temperatur, insbesondere oberhalb eine entsprechende Aktivierungstemperatur, das Aufschäumverhalten bzw. das tatsächlich aufgeschäumte Objektvolumen (zeitweise) erhöht werden. Entsprechend kann bei Erniedrigung der Temperatur, insbesondere unterhalb eine entsprechende Aktivierungstemperatur, das Aufschäumverhalten bzw. das tatsächlich aufgeschäumte Objektvolumen (zeitweise) verringert werden.

Die Austragseinrichtung kann hierfür eine in wenigstens einem Temperierparameter, insbesondere der in das auf einen Untergrund aufbringbare bzw. aufzubringende Extrusionsmaterial einbringbaren Wärmemenge, variierbare Temperiereinrichtung ausgebildet sein oder eine solche umfassen. Mithin ist es möglich, die Temperatur des Extrusionsmaterials vermittels der Austragseinrichtung, insbesondere unabhängig von der Extrusionseinrichtung, gezielt zu beeinflussen. Eine entsprechende Temperiereinrichtung kann z. B. als Heiz- und/oder Kühleinrichtung ausgebildet sein oder eine solche umfassen.

Alternativ oder ergänzend kann die Austragseinrichtung eingerichtet sein, einen den Aufschäumgrad bzw. Schäumgrad des vermittels der Extrusionseinrichtung aufgeschmolzenen schäumbaren Extrusionsmaterials auf einen Untergrund betreffenden Parameter einzustellen bzw. zu verändern. Ein entsprechender Parameter kann z. B. eine Treibmittelmenge bzw. -konzentration des auf einen Untergrund aufzutragenden schäumbaren oder zumindest teilweise geschäumten Extrusionsmaterials sein. Durch eine gezielte Einstellung bzw. Veränderung der Treibmittelmenge bzw. -konzentration kann das Aufschäumverhalten gezielt beeinflusst bzw. gesteuert werden. Insbesondere kann das Aufschäumverhalten durch gezielte Einstellung bzw. Veränderung des Schäumgrads für ein z. B. Treibmittel, welches z. B. eine bestimmte Menge (Aktivierungs- bzw. Grenzmenge) respektive eine bestimmte Konzentration (Aktivierungs- bzw. Grenzkonzentration) zum Initiieren eines Schäumvorgangs erfordert, gezielt beeinflusst bzw. gesteuert werden. Beispielsweise kann bei Erhöhung der Menge bzw. Konzentration des Treibmittels, insbesondere oberhalb eine entsprechende Aktivierungsmenge bzw. -konzentration, das Aufschäumverhalten bzw. das tatsächlich aufgeschäumte Objektvolumen (zeitweise) erhöht werden. Entsprechend kann bei Erniedrigung der Menge bzw. Konzentration des Treibmittels, insbesondere unterhalb eine entsprechende Aktivierungsmenge bzw. - konzentration, das Aufschäumverhalten bzw. das tatsächlich aufgeschäumte Objektvolumen (zeitweise) verringert werden. In gleicher Weise kann durch eine gezielte Einstellung bzw. Veränderung der Treibmittelmenge bzw. -konzentration eine gewünschte Schaumstruktur des Objekts, insbesondere unter veränderlichen äußeren Bedingungen, wie z. B. Druck- und/oder Feuchtigkeits- und/oder Temperaturbedingen, gewährleistet werden. Insbesondere kann durch eine gezielte Einstellung bzw. Veränderung der Treibmittelmenge bzw. -konzentration eine (weitgehend) konstante Schaumstruktur des Objekts, insbesondere unter veränderlichen äußeren Bedingungen, wie z. B. Druck- und/oder Feuchtigkeits- und/oder Temperaturbedingen, gewährleistet werden.

Die Austragseinrichtung kann hierfür z. B. als eine in wenigstens einem Schäumparameter, insbesondere einer in das auf einen Untergrund aufbringbare bzw. aufzubringende Extrusionsmaterial einbringbaren Treibmittelmenge bzw. - konzentration, variierbare Schäumeinrichtung ausgebildet sein oder eine solche umfassen. Eine entsprechende Schäumeinrichtung kann konkret z. B. als eine bereits erwähnte Treibmittelzuführeinrichtung ausgebildet sein oder eine solche umfassen, über welche wenigstens ein Treibmittel, d. h. insbesondere eine bestimmte Menge bzw. Konzentration eines bestimmten Treibmittels, zu einem vermittels der Vorrichtung verarbeiteten Extrusions- bzw. Kunststoffmaterial zuführbar ist.

Die Vorrichtung kann eine zumindest der Austragseinrichtung zuordenbare oder zugeordnete, hardware- und/oder softwaremäßig implementierte Steuer- oder Regeleinrichtung umfassen, welche zur Steuerung oder Regelung wenigstens eines Betriebsparameters der Austragseinrichtung, insbesondere im Hinblick auf wenigstens ein Zielkriterium, eingerichtet ist. Selbstverständlich kann eine entsprechende Steuer- oder Regeleinrichtung gegebenenfalls auch eingerichtet sein, Betriebsparameter einer entsprechenden Fördereinrichtung, Temperiereinrichtung, Schäumeinrichtung bzw. Treibmittelzuführeinrichtung, insbesondere im Hinblick auf wenigstens ein Zielkriterium, zu steuern bzw. zu regeln.

Ein entsprechendes Zielkriterium kann z. B. eine bestimmte Schaumstruktur des durch Austragen des Extrusionsmaterials auf einen Untergrund ausbildbaren oder ausgebildeten zumindest abschnittsweise geschäumten dreidimensionalen Objekts betreffen, sodass sich durch Vorgabe eines Zielkriteriums ein Objekt mit einer gewünschten Schaumstruktur und somit gewünschten Schaumeigenschaften herstellen lässt. Ein entsprechendes Zielkriterium kann - insbesondere im Hinblick auf Objekte mit lokal unterschiedlichen Eigenschaften - eine bestimmte Schaumstruktur innerhalb einer Objektebene bzw. -lage und/oder zwischen mehreren Objektebenen bzw. -lagen betreffen.

Im Allgemeinen kann ein entsprechendes Zielkriterium sonach die Eigenschaften, d. h. insbesondere die, z. B. durch Dichte, Festigkeit, Steifigkeit, Masse, etc. definierten, strukturellen Eigenschaften eines vermittels der Vorrichtung herstellbaren bzw. hergestellten Objekts betreffen, sodass sich durch Vorgabe eines Zielkriteriums ein Objekt mit gewünschten Eigenschaften herstellen lässt. Ein entsprechendes Zielkriterium kann - insbesondere im Hinblick auf Objekte mit lokal unterschiedlichen Eigenschaften - im Allgemeinen bestimmte strukturelle Eigenschaften innerhalb einer Objektebene bzw. -lage und/oder zwischen mehreren Objektebenen bzw. -lagen betreffen.

Die Vorrichtung kann ferner eine hardware- und/oder softwaremäßig implementierte Erfassungseinrichtung umfassen, welche zur Erfassung wenigstens eines chemischen und/oder physikalischen und/oder geometrischen Parameters des über die Austragseinrichtung auf einen Untergrund austragbaren oder ausgetragenen Extrusionsmaterials und zur Erzeugung einer einen erfassten chemischen und/oder physikalischen und/oder geometrischen Parameters des über die Austragseinrichtung auf einen Untergrund austragbaren oder ausgetragenen Extrusionsmaterials beschreibenden Erfassungsinformation eingerichtet ist. Eine entsprechende Erfassungseinrichtung kann gleichermaßen eingerichtet sein, wenigstens einen chemischen und/oder physikalischen und/oder geometrischen Parameter eines vermittels der Vorrichtung herstellbaren bzw. hergestellten Objekts zu erfassen und eine entsprechende Erfassungsinformation zu erzeugen.

Eine entsprechende Erfassungseinrichtung kann z. B. als eine akustische und/oder optische und/oder mechanische und/oder thermische Erfassungseinrichtung ausgebildet sein. Eine entsprechende Erfassungseinrichtung kann sonach beispielsweise als akustische und/oder optische und/oder mechanische und/oder thermische Sensoreinrichtung ausgebildet sein, welche ein akustisches und/oder optisches und/oder mechanisches und/oder thermisches Sensorelement umfasst. Ein akustisches Erfassungs- bzw. Sensorelement kann z. B. ein Schallelement, insbesondere ein Ultraschallsensorelement, sein, ein optisches Erfassungs- bzw. Sensorelement kann z. B. ein Bilderfassungselement, wie z. B. ein CCD-Sensorelement, ein Pixelsensorelement, etc., sein, ein mechanisches Erfassungs- bzw. Sensorelement kann z. B. ein Tastelement, z. B. zur Erfassung der Härte, Oberflächenstruktur, etc., sein, ein thermisches Erfassungs- bzw. Sensorelement kann z. B. ein Temperaturerfassungselement, wie z. B. ein Infrarotsensorelement sein.

Eine entsprechende Steuer- oder Regeleinrichtung kann ferner eingerichtet sein, den Betrieb zumindest der Austragseinrichtung, gegebenenfalls auch den Betrieb der Austragseinrichtung und der Extrusionseinrichtung, auf auf Grundlage einer entsprechenden Erfassungsinformation zu steuern oder zu regeln. Mithin kann auf Grundlage von vermittels einer entsprechenden Erfassungseinrichtung erzeugter Erfassungsinformationen, insbesondere in Echt-Zeit, und einer darauf basierenden Steuerung bzw. Regelung des Betriebs zumindest der Austragseinrichtung ein Qualitätsmonitoring implementiert werden. Insbesondere kann ein, gegebenenfalls geschlossener, Steuer- bzw. Regelkreis implementiert werden, welcher z. B. die Einhaltung eines entsprechenden Zielkriteriums gewährleistet.

Baulich betrachtet kann die Austragseinrichtung in allen Ausführungsformen als modulartige bzw. -förmige, gegebenenfalls nachrüstbare, Funktionskomponente der Vorrichtung ausgebildet sein. Die, wie erwähnt, ohnehin typischerweise als zu der Extrusionseinrichtung gesonderte Bau- bzw. Funktionseinheit zu erachtende Austragseinrichtung kann sonach ein eigenes Bau- bzw. Funktionsmodul der Vorrichtung darstellen. Derart lässt sich die Austragseinrichtung gegebenenfalls an eine bestehende Extrusionseinrichtung nachrüsten bzw. im Falle von Service, Reparatur oder Verschleiß einfach austauschen.

Die Austragseinrichtung kann in allen Ausführungsformen unmittelbar oder mittelbar, d. h. insbesondere unter Zwischenschaltung wenigstens eines die Extrusionseinrichtung strömungstechnisch mit der Austragseinrichtung verbindenden, z. B. rohr- bzw. schlauchförmigen, Verbindungselements, indirekt an einen Ausströmöffnung der Extrusionseinrichtung angeschlossen sein. Ein entsprechendes Verbindungselement kann zumindest abschnittsweise, gegebenenfalls vollständig, aus einem starren Material bzw. einer starren Materialstruktur, wie z. B. einem Metall bzw. einer Metallstruktur, oder aus einem flexiblen Material bzw. einer flexiblen Materialstruktur, wie z. B. einem Schlauchmaterial bzw. einer Schlauchstruktur, ausgebildet sein.

Ein unmittelbarer Anschluss der Austragseinrichtung an der Extrusionseinrichtung ermöglicht eine räumlich kompakte Bauform der Vorrichtung, ein mittelbarer Anschluss der Austragseinrichtung an der Extrusionseinrichtung ermöglicht eine räumliche Trennung der Extrusionseinrichtung von der Austragseinrichtung und umgekehrt.

Die Austragseinrichtung kann in allen Ausführungsformen ferner in wenigstens einem Bewegungsfreiheitsgrad relativ zu der Extrusionseinrichtung bewegbar gelagert sein. Der Austragseinrichtung kann sonach eine, z. B. als Antriebsmotor konfigurierte, Antriebseinrichtung, welche zum Antrieb der Austragseinrichtung in wenigstens einem Bewegungsfreiheitsgrad eingerichtet ist, zugeordnet sein. Bei einem entsprechenden Bewegungsfreiheitsgrad kann es sich um einen rotatorischen und/oder um einen translatorischen Bewegungsfreiheitsgrad handeln. Dies kann insbesondere auch gelten, wenn die Vorrichtung, wie grundsätzlich denkbar, mehrere Austragseinrichtungen umfasst. In entsprechenden Ausführungsformen kann bzw. können sonach eine oder mehrere Austragseinrichtungen abhängig oder unabhängig voneinander relativ zu einer Extrusionseinrichtung in wenigstens einem Bewegungsfreiheitsgrad bewegbar gelagert sein.

Im Zusammenhang mit entsprechenden Treibmittelzuführeinrichtung ist zu ergänzen, dass die Vorrichtung in allen Ausführungsformen mehrere Treibmittelzuführeinrichtungen umfassen kann. Insbesondere kann die Vorrichtung mehrere räumlich verteilt angeordnete Treibmittelzuführeinrichtungen umfassen, sodass Treibmittel an unterschiedlichen Stellen zuführbar ist. Beispielsweise kann eine erste Treibmittelzuführeinrichtung der Extrusionseinrichtung zugeordnet, d. h. an oder in der Extrusionseinrichtung angeordnet oder ausgebildet sein, und wenigstens eine weitere Treibmittelzuführeinrichtung der Austragseinrichtung zugeordnet, d. h. an oder in der Austragseinrichtung angeordnet oder ausgebildet sein. Ebenso ist es denkbar, dass eine mehrere Treibmittelzuführeinrichtungen der Extrusionseinrichtung zugeordnet sind, d. h. eine erste Treibmittelzuführeinrichtungen in einem ersten Bereich an oder in der Extrusionseinrichtung angeordnet oder ausgebildet ist und wenigstens eine weitere Treibmittelzuführeinrichtung in einem weiteren Bereich an oder in der Extrusionseinrichtung angeordnet oder ausgebildet ist. In analoger Weise können der Austragseinrichtung mehrere Treibmittelzuführeinrichtungen zugeordnet sein. Beliebige Kombinationen sind denkbar.

Ein zweiter Aspekt der Erfindung betrifft ein Verfahren zur extrusionsbasierten Herstellung eines wenigstens eines zumindest abschnittsweise, gegebenenfalls vollständig, geschäumten dreidimensionalen Objekts, insbesondere unter Verwendung wenigstens einer Vorrichtung gemäß dem ersten Aspekt der Erfindung.

Das Verfahren umfasst die Schritte: Aufschmelzen eines schäumbaren Extrusionsmaterials, insbesondere vermittels einer Extrusionseinrichtung; Austragen bzw. Aufbringen des vermittels der Extrusionseinrichtung aufgeschmolzenen schäumbaren Extrusionsmaterials auf einen Untergrund, insbesondere vermittels einer der Extrusionseinrichtung nachgeschaltet angeordneten oder ausgebildeten Austragseinrichtung; und Einstellen bzw. Verändern wenigstens eines das Aufschäumverhalten des vermittels der Extrusionseinrichtung aufgeschmolzenen, auf einen Untergrund aufzutragenden schäumbaren oder zumindest teilweise geschäumten Extrusionsmaterials betreffenden Parameters, insbesondere vermittels der Austragseinrichtung.

Sämtliche Ausführungen im Zusammenhang mit der Vorrichtung gemäß dem ersten Aspekt der Erfindung gelten analog für das Verfahren gemäß dem zweiten Aspekt der Erfindung.

Die Erfindung ist anhand von Ausführungsbeispielen in den Zeichnungen nochmals erläutert. Dabei zeigt:
Fig. 1, 2 jeweils eine Prinzipdarstellung einer Vorrichtung zur extrusionsbasierten Herstellung eines zumindest abschnittsweise geschäumten dreidimensionalen Objekts gemäß einem Ausführungsbeispiel;
Fig. 3 eine Prinzipdarstellung eines Objekts bzw. Objektabschnitts, welches nach einem Verfahren gemäß einem Ausführungsbeispiel hergestellt ist.

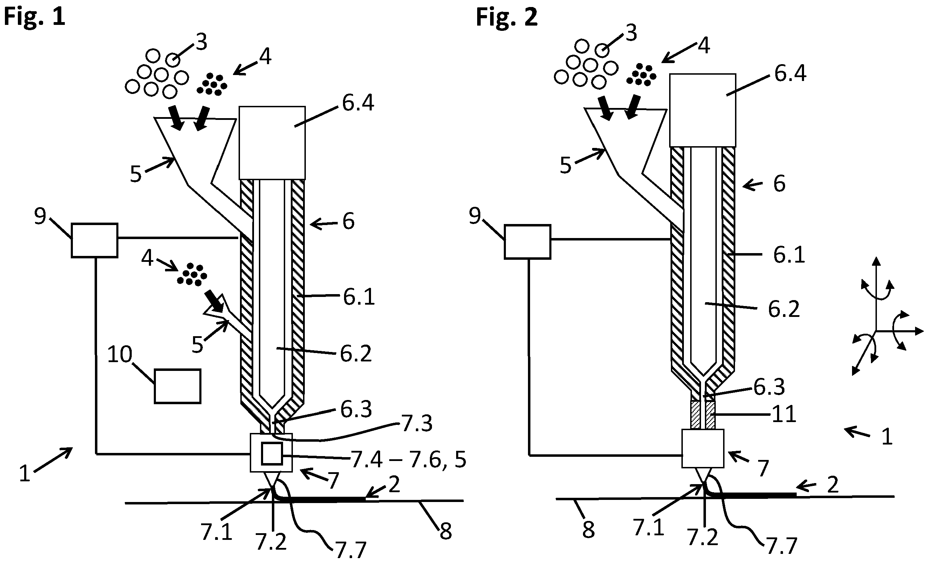

Fig. 1 zeigt eine Prinzipdarstellung einer Vorrichtung 1 zur extrusionsbasierten Herstellung eines zumindest abschnittsweise geschäumten dreidimensionalen Objekts 2 gemäß einem ersten Ausführungsbeispiel.

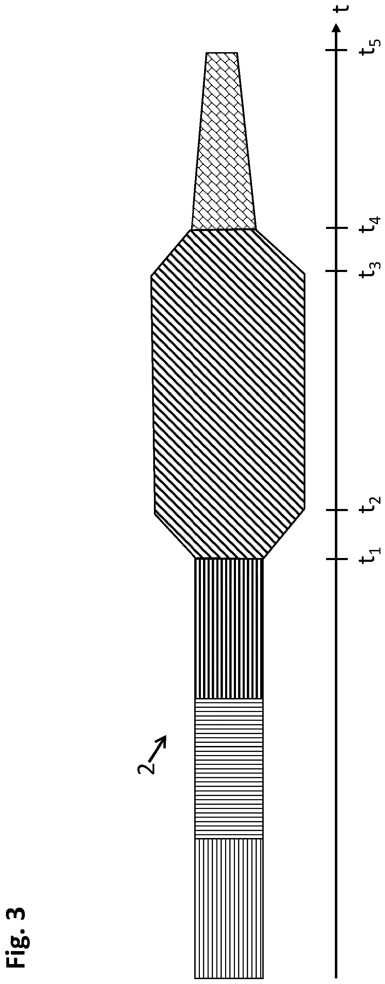

Die Vorrichtung 1 ist konkret zur extrusionsbasierten Herstellung wenigstens eines zumindest abschnittsweise, gegebenenfalls vollständig, geschäumten dreidimensionalen Objekts 2 über einen zumindest abschnittsweisen, gegebenenfalls vollständigen, extrusionsbasierten lagen- bzw. schichtweisen Aufbau eingerichtet. Ein vermittels der Vorrichtung 1 herstellbares bzw. hergestelltes dreidimensionales Objekt 2 kann sonach zumindest abschnittsweise, gegebenenfalls vollständig, eine durch einen, z. B. chemischen und/oder physikalischen, Expansions- bzw. Schäumvorgang herbeigeführte Expansions- bzw. Schaumstruktur - diese kann sich beispielsweise durch eine offen- oder geschlossenzellige Materialstruktur auszeichnen - aufweisen respektive mit einer solchen ausgebildet sein (vgl. Fig. 3). Ein vermittels der Vorrichtung 1 herstellbares bzw. hergestelltes dreidimensionales Objekt 2 kann sonach zumindest abschnittsweise, gegebenenfalls vollständig, als ein aus einem zumindest teilweise expandierten bzw. geschäumten Extrusionsmaterial gebildeter Expansions- bzw. Schaumkörper bezeichnet bzw. erachtet werden.

Unter einem Extrusionsmaterial ist daher typischerweise ein extrudierbares bzw. extrusionsfähiges und, z. B. chemisch und/oder physikalisch, expandierbares bzw. schäumbares Kunststoffmaterial zu verstehen.

Ein entsprechendes Kunststoffmaterial 3 - insbesondere kommen thermoplastische Kunststoffmaterialien in Betracht - kann sonach mit einem einen Expansions- bzw. Schäumvorgang des Kunststoffmaterials 3 herbeiführenden Treibmittel 4, d. h. insbesondere mit einem chemischen und/oder physikalischen Treibmittel 4, versehen sein bzw. im Rahmen der Verarbeitung vermittels der Vorrichtung 1 mit einem Treibmittel 4 versehen werden.

Ein entsprechendes Treibmittel 4 kann z. B. in Form einer Flüssigkeit, eines Gases oder eines Feststoffs vorliegen. Bei einem entsprechenden Feststoff kann es sich z. B. um ein granulatartiges bzw. -förmiges respektive pulverartiges bzw. -förmiges Material handeln. Insbesondere kann es sich um ein granulatartiges bzw. -förmiges respektive pulverartiges bzw. -förmiges Material handeln, welches unter bestimmten chemischen und/oder physikalischen Bedingungen, d. h. z. B. ober- oder unterhalb einer bestimmten Temperatur, zerfällt, wodurch ein Expansions- bzw. Schäumvorgang des Kunststoffmaterials 3 herbeigeführt wird.

Wie sich im Weiteren ergibt, kann das Kunststoffmaterial 3 (erst) im Rahmen der Verarbeitung vermittels der Vorrichtung 1 mit einem Treibmittel 4 versehen werden kann. Es ist sonach möglich, dass die Vorrichtung 1 wenigstens eine Treibmittelzuführeinrichtung 5 umfasst, über welche wenigstens ein Treibmittel 4, d. h. insbesondere eine bestimmte Menge bzw. Konzentration eines bestimmten Treibmittels 4, zu einem vermittels der Vorrichtung 1 verarbeiteten Kunststoffmaterial 3 zuführbar ist. Derart können expandierbare bzw. schäumbare Gemische aus wenigstens einem Kunststoffmaterial 3 und wenigstens einem Treibmittel 4 im Rahmen des Aufschmelzens eines Kunststoffmaterials 3 erzeugt werden. Entsprechende Gemische können ebenso als Extrusionsmaterialien erachtet werden.

Die Vorrichtung 1 umfasst die bereits erwähnte Extrusionseinrichtung 6, welche zum Aufschmelzen bzw. Plastifizieren eines Extrusions- bzw. Kunststoffmaterials eingerichtet ist. Die Extrusionseinrichtung 6 umfasst eine gegebenenfalls auch als Extruderzylinder zu bezeichnende bzw. zu erachtende Extruderkammer 6.1 sowie eine in der Extruderkammer 6.1 angeordnete, eine Extruderachse (nicht bezeichnet) definierende Extruderschnecke 6.2. Die Extruderkammer 6.1 umfasst eine oder mehrere die Extruderkammer 6.1 begrenzende bzw. definierende Extruderkammerwandungen (nicht bezeichnet). Die Extruderkammer 6.1 kann unterschiedlich funktionalisierte Bereiche bzw. Zonen (nicht bezeichnet), wie z. B. eine, z. B. trichterartige bzw. -förmigen, Befüllbereich, über welchen ein Befüllen der Extruderkammer 6.1 mit aufzuschmelzendem Extrusions- bzw. Kunststoffmaterial erfolgt, einen Aufschmelzbereich, in welchem das Aufschmelzen des in die Extruderkammer 6.1 gefüllten aufzuschmelzenden Extrusions- bzw. Kunststoffmaterials erfolgt, sowie einen Ausströmbereich, über welchen aufgeschmolzenes Extrusions- bzw. Kunststoffmaterial aus der Extruderkammer 6.1 ausströmen kann, aufweisen. Mit 6.4 ist eine der Extruderschnecke 6.2 zugeordnete Antriebseinrichtung bezeichnet, über welche sich eine die Extruderschnecke 6.2 um die Extruderachse drehende Antriebskraft erzeugen lässt.

Die Extrusionseinrichtung 6 kann in wenigstens einem Bewegungsfreiheitsgrad relativ zu dem bzw. einem Untergrund bewegbar gelagert sein. Zur Realisierung von Bewegungen der Extrusionseinrichtung 6 kann die Vorrichtung 1 eine Antriebseinrichtung (nicht gezeigt) und/oder eine Führungseinrichtung (nicht gezeigt) umfassen. Eine entsprechende, z. B. als Antriebsmotor implementierte, Antriebseinrichtung ist typischerweise zur Erzeugung von die Extrusionseinrichtung 6 in eine Bewegung entlang einer translatorischen und/oder rotatorischen Bewegungsbahn versetzenden Antriebskraft eingerichtet. Eine entsprechende, z. B. als Führungsschiene implementierte, Führungseinrichtung ist typischerweise zur Bestimmung entsprechender Bewegungsbahnen eingerichtet. Einer entsprechenden Antriebs- und/oder Führungseinrichtung kann eine Steuereinrichtung zugeordnet sein, welche zur Erzeugung von den Betrieb der Antriebs- bzw. Führungseinrichtung steuernden Daten eingerichtet ist, über welche sich ein- oder mehrdimensionale Bewegungsbahnen der Extrusionseinrichtung 6 realisieren lassen.

Die Vorrichtung 1 umfasst weiterhin die ebenso bereits erwähnte, der Extrusionseinrichtung 6 nachgeschaltet angeordnete oder ausgebildete Austragseinrichtung 7, welche zum Austragen bzw. Aufbringen eines vermittels der Extrusionseinrichtung 6 aufgeschmolzenen, schäumbaren oder zumindest teilweise geschäumten Extrusionsmaterials auf einen Untergrund 8 eingerichtet ist. Die Austragseinrichtung 7 ist eingerichtet, ein aufgeschmolzenes, schäumbares oder zumindest teilweise geschäumtes Extrusionsmaterial bahnförmig bzw. -strangförmig kontinuierlich oder quasi-kontinuierlich, d. h. z. B. in einer kontinuierlichen oder quasi-kontinuierlichen Material- bzw. Schmelzebahn bzw. in einem kontinuierlichen oder quasi-kontinuierlichen Material- bzw. Schmelzestrang, auf einen Untergrund 8 auszutragen bzw. aufzubringen. Die Austragseinrichtung 7 umfasst hierfür ein Austragselement 7.1 mit einer, insbesondere düsenartige bzw. -förmige, Ausströmöffnung 7.2, über welche Extrusionsmaterial auf einen Untergrund 8 austragbar bzw. aufbringbar ist.

Anhand der Fig. 1, 2 ist ersichtlich, dass die Austragseinrichtung 7 eine zu der Extrusionseinrichtung 6 bzw. Extruderkammer 6.1 gesonderte Bau- bzw. Funktionseinheit der Vorrichtung 1 darstellt.

Bei dem Untergrund 8 kann es sich z. B. um eine Bauplattform oder um eine bereits auf einen Untergrund 8 aufgebrachte Lage bzw. Schicht des oder eines Extrusionsmaterials, worunter gegebenenfalls auch nur eine einzelne Materialbahn bzw. ein einzelner Materialstrang des oder eines Extrusionsmaterials zu verstehen sein kann, handeln.

Anhand der Fig. 1, 2 ist ferner ersichtlich, dass die Extrusionseinrichtung 6 und die Austragseinrichtung 7 strömungstechnisch miteinander verbindbar bzw. verbunden sind, insbesondere derart, dass vermittels der Extrusionseinrichtung 6 aufgeschmolzenes Extrusionsmaterial von der Extrusionseinrichtung 6 in die Austragseinrichtung 7 strömen kann, um über die Austragseinrichtung 7 auf einen Untergrund 8 ausgetragen bzw. aufgebracht werden zu können. Die Extrusionseinrichtung 6, d. h. insbesondere die Extruderkammer 6.1, umfasst sonach eine, z. B. düsenartige bzw. -förmige, Ausströmöffnung 6.3 im Sinne eines Ausgangs, über welche(n) aufgeschmolzenes Extrusions- bzw. Kunststoffmaterial aus der Extrusionseinrichtung 6 in die bzw. in Richtung der Austragseinrichtung 7 ausströmen kann. Die Austragseinrichtung 7 umfasst entsprechend eine, z. B. düsenartige bzw. -förmige, Einströmöffnung 7.3 im Sinne eines Eingangs, über welche(n) aufgeschmolzenes Extrusions- bzw. Kunststoffmaterial aus der Extrusionseinrichtung 6 in die Austragseinrichtung 7 einströmen kann.

Wie erwähnt, umfasst die Austragseinrichtung 7 zudem die, z. B. düsenartige bzw. - förmige, Ausströmöffnung 7.2, über welche aufgeschmolzenes schäumbares bzw. zumindest teilweise geschäumtes Extrusionsmaterial aus der Austragseinrichtung 7 auf einen Untergrund 8 ausströmen und somit auf einen Untergrund 8 ausgetragen bzw. aufgebracht werden kann.

Die Austragseinrichtung 7 ist zur Einstellung bzw. Veränderung wenigstens eines das Aufschäumverhalten eines vermittels der Austragseinrichtung 7 auf einen Untergrund 8 auszutragenden bzw. aufzubringenden schäumbaren oder zumindest teilweise geschäumten Extrusionsmaterials beeinflussenden Parameters eingerichtet. Vermittels der Austragseinrichtung 7 lässt sich sonach wenigstens ein Parameter einstellen bzw. verändern, welcher das Aufschäumverhalten eines auf einen Untergrund 8 aufzutragenden schäumbaren oder zumindest teilweise geschäumten Extrusionsmaterials beeinflusst.

Die Eigenschaften eines vermittels der Vorrichtung 1 herstellbaren Objekts 2 lassen sich sonach - wie anhand von Fig. 3 beispielhaft erkennbar - über die vermittels der Austragseinrichtung 7 mögliche Einstellung bzw. Veränderung entsprechender Parameter gezielt einstellen bzw. verändern, als sich das für die Eigenschaften des herzustellenden Objekts 2 bedeutsame Aufschäumverhalten des Extrusionsmaterials gezielt, insbesondere örtlich und/oder zeitlich, einstellen bzw. verändern lässt. Insbesondere lassen sich - wie anhand von Fig. 3 beispielhaft erkennbar - Abmessungen und/oder Volumen einer vermittels der Austragseinrichtung 7 auf einen Untergrund 8 austragbaren bzw. aufbringbaren respektive ausgetragenen bzw. aufgebrachten Material- bzw. Schmelzebahn gezielt, insbesondere örtlich und/oder zeitlich, einstellen bzw. verändern, sodass sich Objekte 2 mit innerhalb einer Objektebene bzw. -lage und/oder zwischen mehreren Objektebenen bzw. -lagen lokal unterschiedlichen Eigenschaften realisieren lassen.

Die Austragseinrichtung 7 kann insbesondere eingerichtet sein, wenigstens einen das Aufschäumverhalten eines vermittels der Austragseinrichtung 7 auf einen Untergrund 8 auszutragenden bzw. aufzubringenden Extrusionsmaterials beeinflussenden Parameters kontinuierlich oder diskontinuierlich einzustellen bzw. zu verändern. Mithin kann eine kontinuierliche oder diskontinuierlich veränderliche Einstellung bzw. Veränderung des Aufschäumverhaltens und daraus resultierend der Eigenschaften eines herzustellenden Objekts möglich sein, sodass sich Objekte mit innerhalb einer Objektebene bzw. -lage und/oder zwischen mehreren Objektebenen bzw. -lagen lokal unterschiedlichen Eigenschaften realisieren lassen. Kontinuierliche Veränderungen sind in Fig. 3 beispielhaft in den jeweiligen Intervallen zwischen den Zeitpunkten t₁ und t₂, den t₃ und t₄ sowie t₄ und t₅ beispielhaft dargestellt.

Nachfolgend werden in nicht abschließender Weise Beispiele für vermittels der Austragseinrichtung einstellbare bzw. veränderliche Parameter gegeben:
Die Austragseinrichtung 7 ist eingerichtet, einen die Austragsgeschwindigkeit oder -menge des auf einen Untergrund 8 aufzutragenden Extrusionsmaterials beeinflussenden Parameters einzustellen bzw. zu verändern. Ein entsprechender Parameter kann konkret z. B. die Austragsgeschwindigkeit oder die Austragsmenge des auf einen Untergrund 8 aufzutragenden Extrusionsmaterials sein. Durch eine gezielte Einstellung bzw. Veränderung der Austragsgeschwindigkeit bzw. - menge kann das Aufschäumverhalten gezielt beeinflusst bzw. gesteuert werden. Insbesondere kann das Aufschäumverhalten durch eine Veränderung der Austragsgeschwindigkeit oder -menge für eine gegebene Treibmittelkonzentration gezielt beeinflusst bzw. gesteuert werden. Beispielsweise kann bei Erhöhung der Austragsgeschwindigkeit oder -menge bei unveränderlicher Treibmittelkonzentration das Aufschäumverhalten bzw. das tatsächlich aufgeschäumte Objektvolumen (zeitweise) verringert werden, weil pro ausgetragenem Materialvolumen weniger Treibmittel vorhanden ist. Entsprechend kann bei Erniedrigung der Austragsgeschwindigkeit oder -menge bei unveränderlicher Treibmittelkonzentration das Aufschäumverhalten bzw. das tatsächlich aufgeschäumte Objektvolumen (zeitweise) erhöht werden, weil pro ausgetragenem Materialvolumen mehr Treibmittel vorhanden ist

Die Austragseinrichtung 7 ist hierfür als eine in wenigstens einem Förderparameter, insbesondere der Fördergeschwindigkeit bzw. -menge, variierbare Fördereinrichtung 7.4 ausgebildet oder umfasst eine solche. Mithin ist es möglich, die Austragsgeschwindigkeit oder -menge des Extrusionsmaterials vermittels der Austragseinrichtung 7, insbesondere unabhängig von der Extrusionseinrichtung 6, gezielt zu beeinflussen. Eine entsprechende Fördereinrichtung ist als eine Pumpeneinrichtung, insbesondere eine Zahnradpumpeneinrichtung, ausgebildet oder umfasst eine solche. Über eine entsprechende Förder- bzw. Pumpeneinrichtung 7.4 kann sich eine Zwangsförderung des Extrusionsmaterials aus der Extrusionseinrichtung 6 realisieren lassen; eine entsprechende Förder- bzw. Pumpeneinrichtung 7.4 kann sonach eingerichtet sein, eine Zwangsförderung des Extrusionsmaterials aus der Extrusionseinrichtung 6 zu realisieren.

In diesem Zusammenhang ist auch auf die Möglichkeit, dass die Austragseinrichtung 7 eine in ihrer Querschnittsgeometrie variierbare, gegebenenfalls düsenartiges bzw. - förmiges, Ausströmöffnung 7.2 umfassen kann, hinzuweisen. Mithin kann auch über eine gezielte Änderung der Querschnittsgeometrie, d. h. insbesondere der Querschnittsfläche, der Ausströmöffnung 7.2, etwa durch Verstellen einer der Ausströmöffnung 7.2 zugeordneten Blendeneinrichtung, die Austragsgeschwindigkeit oder -menge des Extrusionsmaterials eingestellt bzw. verändert werden. Eine entsprechende Blendeneinrichtung wird weiter unter nochmals im Zusammenhang mit einer Druckerzeugungseinrichtung 7.7 zur Einstellung bzw. Veränderung eines den Druck des auf einen Untergrund 8 aufzutragenden schäumbaren oder zumindest teilweise geschäumten Extrusionsmaterials beeinflussenden Parameters genannt.

Alternativ oder ergänzend kann die Austragseinrichtung 7 sonach, wie angedeutet, eingerichtet sein, einen den Druck des auf einen Untergrund 8 aufzutragenden schäumbaren oder zumindest teilweise geschäumten Extrusionsmaterials beeinflussenden Parameter einzustellen bzw. zu verändern. Ein entsprechender Parameter kann konkret z. B. der Druck des auf einen Untergrund 8 aufzutragenden schäumbaren oder zumindest teilweise geschäumten Extrusionsmaterials sein. Hierunter ist insbesondere der innerhalb der Austragseinrichtung 7 auf das Extrusionsmaterial wirkende Druck zu verstehen. Durch eine gezielte Einstellung bzw. Veränderung des Drucks kann das Aufschäumverhalten gezielt beeinflusst bzw. gesteuert werden. Insbesondere kann das Aufschäumverhalten durch gezielte Einstellung bzw. Veränderung des Drucks für ein Treibmittel 4, welches z. B. einen bestimmten Druck (Grenzdruck) respektive die Über- oder Unterschreitung eines bestimmten Drucks (Grenzdrucks) zum Initiieren eines Schäumvorgangs erfordert, gezielt beeinflusst bzw. gesteuert werden. Beispielsweise kann bei Erhöhung des Drucks, insbesondere oberhalb einen entsprechenden Grenzdruck, das Aufschäumverhalten bzw. das tatsächlich aufgeschäumte Objektvolumen (zeitweise) verringert bzw. vermieden werden. Entsprechend kann bei Erniedrigung des Drucks, insbesondere unterhalb einen entsprechenden Grenzdruck, das Aufschäumverhalten bzw. das tatsächlich aufgeschäumte Objektvolumen (zeitweise) erhöht bzw. initiiert werden.

Die Austragseinrichtung 7 kann hierfür eine in wenigstens einem Druckparameter, insbesondere des in das innerhalb der Austragseinrichtung 7 befindliche Extrusionsmaterial wirkenden Drucks, variierbare Druckerzeugungseinrichtung 7.7 ausgebildet sein oder eine solche umfassen. Mithin ist es möglich, den Druck des Extrusionsmaterials vermittels der Austragseinrichtung 7, insbesondere unabhängig von der Extrusionseinrichtung 6, gezielt zu beeinflussen. Eine entsprechende Druckerzeugungseinrichtung 7.7 kann z. B. als eine bereits erwähnte die Querschnittsgeometrie der Ausströmöffnung 7.2 der Austragseinrichtung 7 variabel beeinflussende Blendeneinrichtung ausgebildet sein oder eine solche umfassen.

Eine entsprechende Druckerzeugungseinrichtung 7.7 kann insbesondere eingerichtet sein, für eine gegebene Austragsgeschwindigkeit oder -menge des Extrusionsmaterials ein bestimmtes Druckniveau innerhalb der Austragseinrichtung 7 einzustellen. In Abhängigkeit des Druckniveaus kann ein Aufschäumgrad des Extrusionsmaterials innerhalb der Austragseinrichtung 7 eingestellt werden, über welchen sich typischerweise Einfluss auf die Eigenschaften des aus der Austragseinrichtung 7 austretenden Material- bzw. Schmelzestrangs nehmen lässt. Beispielsweise kann durch die Einstellung eines Druckniveaus unterhalb eines Grenzdrucks, welcher zum Initiieren eines Aufschäumvorgangs zu unterschreiten ist, ein zumindest teilweises Aufschäumen des Extrusionsmaterials innerhalb der Austragseinrichtung 7 herbeigeführt werden, welches typischerweise in einem vergleichsweise flachen Material- bzw. Schmelzestrang resultiert, als das Extrusionsmaterial außerhalb der Austragseinrichtung 7, d. h. nach Austritt aus der Ausströmöffnung 7.2, nur noch teilweise aufschäumt. Entsprechend kann durch die Einstellung eines Druckniveaus oberhalb eines Grenzdrucks, welcher zum Initiieren eines Aufschäumvorgangs zu unterschreiten ist, ein zumindest teilweises Aufschäumen des Extrusionsmaterials innerhalb der Austragseinrichtung 7 verhindert werden, was typischerweise in einem vergleichsweise hohen Material- bzw. Schmelzestrang resultiert, als das Extrusionsmaterial erst außerhalb der Austragseinrichtung 7, d. h. nach Austritt aus der Ausströmöffnung 7.2, aufschäumt.

Alternativ oder ergänzend kann die Austragseinrichtung 7 eingerichtet sein, einen die Temperatur des auf einen Untergrund 8 aufzutragenden Extrusionsmaterials beeinflussenden Parameter einzustellen bzw. zu verändern. Ein entsprechender Parameter kann konkret z. B. die Temperatur des auf einen Untergrund 8 aufzutragenden Extrusionsmaterials sein. Durch eine gezielte Einstellung bzw. Veränderung der Temperatur kann das Aufschäumverhalten gezielt beeinflusst bzw. gesteuert werden. Insbesondere kann das Aufschäumverhalten durch gezielte Einstellung bzw. Veränderung der Temperatur für ein Treibmittel, welches z. B. eine bestimmte Aktivierungs- bzw. Grenztemperatur bzw. Wärmemenge zum Initiieren eines Schäumvorgangs erfordert, gezielt beeinflusst bzw. gesteuert werden. Beispielsweise kann bei Erhöhung der Temperatur, insbesondere oberhalb eine entsprechende Aktivierungstemperatur, das Aufschäumverhalten bzw. das tatsächlich aufgeschäumte Objektvolumen (zeitweise) erhöht werden. Entsprechend kann bei Erniedrigung der Temperatur, insbesondere unterhalb eine entsprechende Aktivierungstemperatur, das Aufschäumverhalten bzw. das tatsächlich aufgeschäumte Objektvolumen (zeitweise) verringert werden.

Die Austragseinrichtung 7 kann hierfür eine in wenigstens einem Temperierparameter, insbesondere der in das auf einen Untergrund aufbringbare bzw. aufzubringende Extrusionsmaterial einbringbaren Wärmemenge, variierbare Temperiereinrichtung 7.5 ausgebildet sein oder eine solche umfassen. Mithin ist es möglich, die Temperatur des Extrusionsmaterials vermittels der Austragseinrichtung 7, insbesondere unabhängig von der Extrusionseinrichtung 6, gezielt zu beeinflussen. Eine entsprechende Temperiereinrichtung 7.5 kann z. B. als Heiz- und/oder Kühleinrichtung ausgebildet sein oder eine solche umfassen.

Alternativ oder ergänzend kann die Austragseinrichtung 7 eingerichtet sein, einen den Aufschäumgrad bzw. Schäumgrad des vermittels der Extrusionseinrichtung 6 aufgeschmolzenen schäumbaren Extrusionsmaterials auf einen Untergrund 8 betreffenden Parameter einzustellen bzw. zu verändern. Ein entsprechender Parameter kann z. B. eine Treibmittelmenge bzw. -konzentration des auf einen Untergrund 8 aufzutragenden Extrusionsmaterials sein. Durch eine gezielte Einstellung bzw. Veränderung der Treibmittelmenge bzw. -konzentration kann das Aufschäumverhalten gezielt beeinflusst bzw. gesteuert werden. Insbesondere kann das Aufschäumverhalten durch gezielte Einstellung bzw. Veränderung des Schäumgrads für ein z. B. Treibmittel 4, welches z. B. eine bestimmte Menge (Aktivierungs- bzw. Grenzmenge) respektive eine bestimmte Konzentration (Aktivierungs- bzw. Grenzkonzentration) zum Initiieren eines Schäumvorgangs erfordert, gezielt beeinflusst bzw. gesteuert werden. Beispielsweise kann bei Erhöhung der Menge bzw. Konzentration des Treibmittels 4, insbesondere oberhalb eine entsprechende Aktivierungsmenge bzw. -konzentration, das Aufschäumverhalten bzw. das tatsächlich aufgeschäumte Objektvolumen (zeitweise) erhöht werden. Entsprechend kann bei Erniedrigung der Menge bzw. Konzentration des Treibmittels 4, insbesondere unterhalb eine entsprechende Aktivierungsmenge bzw. - konzentration, das Aufschäumverhalten bzw. das tatsächlich aufgeschäumte Objektvolumen (zeitweise) verringert werden. In gleicher Weise kann durch eine gezielte Einstellung bzw. Veränderung der Treibmittelmenge bzw. -konzentration eine gewünschte Schaumstruktur des Objekts 2, insbesondere unter veränderlichen äußeren Bedingungen, wie z. B. Druck- und/oder Feuchtigkeits- und/oder Temperaturbedingen, gewährleistet werden. Insbesondere kann durch eine gezielte Einstellung bzw. Veränderung der Treibmittelmenge bzw. -konzentration eine (weitgehend) konstante Schaumstruktur des Objekts 2, insbesondere unter veränderlichen äußeren Bedingungen, wie z. B. Druck- und/oder Feuchtigkeits- und/oder Temperaturbedingen, gewährleistet werden.

Die Austragseinrichtung 7 kann hierfür z. B. als eine in wenigstens einem Schäumparameter, insbesondere einer in das auf einen Untergrund 8 aufbringbare bzw. aufzubringende Extrusionsmaterial einbringbaren Treibmittelmenge bzw. - konzentration, variierbare Schäumeinrichtung 7.6 ausgebildet sein oder eine solche umfassen. Eine entsprechende Schäumeinrichtung 7.6 kann konkret z. B. als eine bereits erwähnte Treibmittelzuführeinrichtung 5 ausgebildet sein oder eine solche umfassen, über welche ein Treibmittel 4, d. h. insbesondere eine bestimmte Menge bzw. Konzentration eines bestimmten Treibmittels 4, zu einem vermittels der Vorrichtung 1 verarbeiteten Extrusions- bzw. Kunststoffmaterial zuführbar ist.

Die Vorrichtung 1 kann eine zumindest der Austragseinrichtung 7 zuordenbare oder zugeordnete, hardware- und/oder softwaremäßig implementierte Steuer- oder Regeleinrichtung 9 umfassen, welche zur Steuerung oder Regelung wenigstens eines Betriebsparameters zumindest der Austragseinrichtung 7, insbesondere im Hinblick auf wenigstens ein Zielkriterium, eingerichtet ist. Selbstverständlich kann eine entsprechende Steuer- oder Regeleinrichtung gegebenenfalls auch eingerichtet sein, Betriebsparameter einer entsprechenden Fördereinrichtung 7.4, Temperiereinrichtung 7.5, Schäumeinrichtung 7.6 bzw. Treibmittelzuführeinrichtung 5, insbesondere im Hinblick auf wenigstens ein Zielkriterium, zu steuern bzw. zu regeln.

Ein entsprechendes Zielkriterium kann z. B. eine bestimmte Schaumstruktur des durch Austragen des Extrusionsmaterials auf einen Untergrund 8 ausbildbaren oder ausgebildeten zumindest abschnittsweise geschäumten dreidimensionalen Objekts 2 betreffen, sodass sich durch Vorgabe eines Zielkriteriums ein Objekt 2 mit einer gewünschten Schaumstruktur und somit gewünschten Schaumeigenschaften herstellen lässt. Ein entsprechendes Zielkriterium kann - insbesondere im Hinblick auf Objekte 2 mit lokal unterschiedlichen Eigenschaften - eine bestimmte Schaumstruktur innerhalb einer Objektebene bzw. -lage und/oder zwischen mehreren Objektebenen bzw. -lagen betreffen.

Im Allgemeinen kann ein entsprechendes Zielkriterium sonach die Eigenschaften, d. h. insbesondere die, z. B. durch Dichte, Festigkeit, Steifigkeit, Masse, etc. definierten, strukturellen Eigenschaften eines vermittels der Vorrichtung 1 herstellbaren bzw. hergestellten Objekts 2 betreffen, sodass sich durch Vorgabe eines Zielkriteriums ein Objekt 2 mit gewünschten Eigenschaften herstellen lässt. Ein entsprechendes Zielkriterium kann - insbesondere im Hinblick auf Objekte 2 mit lokal unterschiedlichen Eigenschaften - im Allgemeinen bestimmte strukturelle Eigenschaften innerhalb einer Objektebene bzw. -lage und/oder zwischen mehreren Objektebenen bzw. -lagen betreffen.

Die Vorrichtung 1 kann ferner eine hardware- und/oder softwaremäßig implementierte Erfassungseinrichtung 10 umfassen, welche zur Erfassung wenigstens eines chemischen und/oder physikalischen und/oder geometrischen Parameters des über die Austragseinrichtung 7 auf einen Untergrund 8 austragbaren oder ausgetragenen Extrusionsmaterials und zur Erzeugung einer einen erfassten chemischen und/oder physikalischen und/oder geometrischen Parameters des über die Austragseinrichtung 7 auf einen Untergrund 8 austragbaren oder ausgetragenen Extrusionsmaterials beschreibenden Erfassungsinformation eingerichtet ist. Die Erfassungseinrichtung 10 kann gleichermaßen eingerichtet sein, wenigstens einen chemischen und/oder physikalischen und/oder geometrischen Parameter eines vermittels der Vorrichtung 1 herstellbaren bzw. hergestellten Objekts 2 zu erfassen und eine entsprechende Erfassungsinformation zu erzeugen.

Die Erfassungseinrichtung 10 kann z. B. als eine akustische und/oder optische und/oder mechanische und/oder thermische Erfassungseinrichtung ausgebildet sein. Die Erfassungseinrichtung 10 kann sonach beispielsweise als akustische und/oder optische mechanische und/oder thermische Sensoreinrichtung ausgebildet sein, welche ein akustisches und/oder optisches und/oder mechanisches und/oder thermisches Sensorelement (nicht gezeigt) umfasst. Ein akustisches Erfassungs- bzw. Sensorelement kann z. B. ein Schallelement, insbesondere ein Ultraschallsensorelement, sein, ein optisches Erfassungs- bzw. Sensorelement kann z. B. ein Bilderfassungselement, wie z. B. ein CCD-Sensorelement, ein Pixelsensorelement, etc., sein, ein mechanisches Erfassungs- bzw. Sensorelement kann z. B. ein Tastelement, z. B. zur Erfassung der Härte, Oberflächenstruktur, etc., sein, ein thermisches Erfassungs- bzw. Sensorelement kann z. B. ein Temperaturerfassungselement, wie z. B. ein Infrarotsensorelement sein.

Die Steuer- oder Regeleinrichtung 9 kann ferner eingerichtet sein, den Betrieb zumindest der Austragseinrichtung 7, gegebenenfalls auch den Betrieb der Austragseinrichtung 7 und der Extrusionseinrichtung 6, auf Grundlage einer entsprechenden Erfassungsinformation zu steuern oder zu regeln. Mithin kann auf Grundlage von vermittels der Erfassungseinrichtung 10 erzeugter Erfassungsinformationen, insbesondere in Echt-Zeit, und einer darauf basierenden Steuerung bzw. Regelung des Betriebs zumindest der Austragseinrichtung 7 ein Qualitätsmonitoring implementiert werden. Insbesondere kann ein, gegebenenfalls geschlossener, Steuer- bzw. Regelkreis implementiert werden, welcher z. B. die Einhaltung eines entsprechenden Zielkriteriums gewährleistet.

Baulich betrachtet kann die Austragseinrichtung 7 in allen Ausführungsbeispielen als modulartige bzw. -förmige, gegebenenfalls nachrüstbare, Funktionskomponente der Vorrichtung 1 ausgebildet sein. Die, wie erwähnt, ohnehin als zu der Extrusionseinrichtung 6 gesonderte Bau- bzw. Funktionseinheit zu erachtende Austragseinrichtung 7 kann sonach ein eigenes Bau- bzw. Funktionsmodul der Vorrichtung 1 darstellen. Derart lässt sich die Austragseinrichtung 7 gegebenenfalls an eine bestehende Extrusionseinrichtung 6 nachrüsten bzw. im Falle von Service, Reparatur oder Verschleiß einfach austauschen.

In dem in Fig. 1 gezeigten Ausführungsbeispiel ist die Austragseinrichtung 7 unmittelbar an die Ausströmöffnung 6.3 der Extrusionseinrichtung 6 angeschlossen. Dies ermöglicht eine räumlich kompakte Bauform der Vorrichtung 1.

Fig. 2 zeigt eine Prinzipdarstellung einer Vorrichtung 1 zur extrusionsbasierten Herstellung eines zumindest abschnittsweise geschäumten dreidimensionalen Objekts gemäß einem weiteren Ausführungsbeispiel.

Das Ausführungsbeispiel gemäß Fig. 2 unterscheidet sich von dem Ausführungsbeispiel gemäß Fig. 1 allein darin, dass die Austragseinrichtung 7 hier nicht unmittelbar, sondern mittelbar unter Zwischenschaltung wenigstens eines die Extrusionseinrichtung strömungstechnisch mit der Austragseinrichtung verbindenden, z. B. rohr- bzw. schlauchförmigen, Verbindungselements 11, an die Ausströmöffnung 6.3 der Extrusionseinrichtung 6 angeschlossen. Dies ermöglicht eine räumliche Trennung der Extrusionseinrichtung 6 von der Austragseinrichtung 7 und umgekehrt. Das Verbindungselement 11 kann zumindest abschnittsweise, gegebenenfalls vollständig, aus einem starren Material bzw. einer starren Materialstruktur, wie z. B. einem Metall bzw. einer Metallstruktur, oder aus einem flexiblen Material bzw. einer flexiblen Materialstruktur, wie z. B. einem Schlauchmaterial bzw. einer Schlauchstruktur, ausgebildet sein.

Wenngleich durch entsprechende Pfeile bzw. Doppelpfeile nur in Fig. 2 angedeutet, kann die Austragseinrichtung 7 in allen Ausführungsbeispielen ferner in wenigstens einem rotatorischen und/oder translatorischen Bewegungsfreiheitsgrad relativ zu der Extrusionseinrichtung 6 bewegbar gelagert sein. Der Austragseinrichtung 7 kann sonach eine, z. B. als Antriebsmotor konfigurierte, Antriebseinrichtung (nicht gezeigt), welche zum Antrieb der Austragseinrichtung 7 in wenigstens einem Bewegungsfreiheitsgrad eingerichtet ist, zugeordnet sein.

Dies kann insbesondere auch für Ausführungsbeispiele gelten, in welchen die Vorrichtung 1, wie grundsätzlich denkbar, mehrere Austragseinrichtungen 7 umfasst. In entsprechenden Ausführungsbeispielen kann bzw. können sonach eine oder mehrere Austragseinrichtungen 7 relativ zu einer Extrusionseinrichtung 7 abhängig oder unabhängig voneinander in wenigstens einem Bewegungsfreiheitsgrad bewegbar gelagert sein.

Bezug nehmend auf sowohl das in Fig. 1 als auch das in Fig. 2 gezeigte Ausführungsbeispiel gilt grundsätzlich Folgendes:
Die Vorrichtung 1 kann, wie erwähnt, wenigstens eine Treibmittelzuführeinrichtung 5 umfassen. Eine entsprechende Treibmittelzuführeinrichtung 5 kann, wie in Fig. 1 beispielhaft gezeigt, z. B. der Extrusionseinrichtung 6 zugeordnet sein. Alternativ oder ergänzend kann die oder eine weitere Treibmittelzuführeinrichtung 5 der Austragseinrichtung 7 zugeordnet sein. Eine entsprechende Treibmittelzuführeinrichtung 5 kann z. B. als mit einer der Extrusionseinrichtung 6 bzw. der Austragseinrichtung 7 koppelbarer bzw. gekoppelter Zuführtrichter ausgebildet sein. Ebenso ist es möglich, dass die oder eine Treibmittelzuführeinrichtung 5 z. B. als mit der Extrusionseinrichtung 6 bzw. der Austragseinrichtung 7 koppelbare bzw. gekoppelte Fördereinrichtung (nicht gezeigt) ausgebildet ist. Eine entsprechende, z. B. als zur Erzeugung einer Förderströmung ausgebildete Strömungserzeugungseinrichtung ausgebildete, Fördereinrichtung kann durch die Einstellung einstellbarer Förderparameter, wie z. B. der Fördergeschwindigkeit bzw. -menge, eine, gegebenenfalls gezielt variierbare, Zuführung von Treibmittel 4 zu einem vermittels der Vorrichtung 1 verarbeiteten Kunststoffmaterial 3, d. h. insbesondere zu einem vermittels der Extrusionseinrichtung 6 aufgeschmolzenen Kunststoffmaterial 3, ermöglichen.

Die Vorrichtung 1 kann in allen Ausführungsbeispielen auch mehrere Treibmittelzuführeinrichtungen 5 umfassen. Insbesondere kann die Vorrichtung 1 mehrere räumlich verteilt angeordnete Treibmittelzuführeinrichtungen 5 umfassen, sodass Treibmittel 4 an unterschiedlichen Stellen zuführbar ist. Beispielsweise kann eine erste Treibmittelzuführeinrichtung 5 der Extrusionseinrichtung 6 zugeordnet, d. h. an oder in der Extrusionseinrichtung 6 angeordnet oder ausgebildet sein, und wenigstens eine weitere Treibmittelzuführeinrichtung 5 der Austragseinrichtung 7 zugeordnet, d. h. an oder in der der Austragseinrichtung 7 angeordnet oder ausgebildet sein. Ebenso ist es denkbar, dass eine mehrere Treibmittelzuführeinrichtungen 5 der Extrusionseinrichtung 6 zugeordnet sind, d. h. eine erste Treibmittelzuführeinrichtungen in einem ersten Bereich der Extrusionseinrichtung 6 an oder in dieser angeordnet oder ausgebildet ist und wenigstens eine weitere Treibmittelzuführeinrichtung 5 in einem weiteren Bereich der Extrusionseinrichtung 6 an oder in dieser angeordnet oder ausgebildet ist. In analoger Weise können der Austragseinrichtung 7 mehrere Treibmittelzuführeinrichtungen 5 zugeordnet sein. Beliebige Kombinationen sind denkbar.

Die Vorrichtung 1 kann in allen Ausführungsbeispielen ferner eine Extrusionseinrichtung 6 mit einer ein oder mehrere Mischelemente umfassenden Mischeinrichtung (nicht gezeigt) umfassen, welche zum Durchmischen des in der Extruderkammer 6.1 befindlichen Extrusions- bzw. Kunststoffmaterials eingerichtet ist. Derart können möglichst homogene expandierbare bzw. schäumbare Gemische aus wenigstens einem Kunststoffmaterial 3 und wenigstens einem Treibmittel 4 erzeugt werden.

Mit den in den Fig. 1, 2 gezeigten Ausführungsbeispielen lässt sich ein Verfahren zur extrusionsbasierten Herstellung eines wenigstens eines zumindest abschnittsweise, gegebenenfalls vollständig, geschäumten dreidimensionalen Objekts 2 implementieren.

Das Verfahren umfasst die Schritte: Aufschmelzen eines schäumbaren Extrusionsmaterials, insbesondere vermittels einer Extrusionseinrichtung 6; Austragen bzw. Aufbringen des vermittels der Extrusionseinrichtung 6 aufgeschmolzenen schäumbaren Extrusionsmaterials auf einen Untergrund 8, insbesondere vermittels einer der Extrusionseinrichtung 6 nachgeschaltet angeordneten oder ausgebildeten Austragseinrichtung 7; und Einstellen bzw. Verändern wenigstens eines das Aufschäumverhalten des vermittels der Extrusionseinrichtung 6 aufgeschmolzenen, auf einen Untergrund 8 aufzutragenden schäumbaren oder zumindest teilweise geschäumten Extrusionsmaterials betreffenden Parameters, insbesondere vermittels der Austragseinrichtung 7.

## Patentansprüche

1. Vorrichtung (1) zur extrusionsbasierten Herstellung wenigstens eines zumindest abschnittsweise geschäumten dreidimensionalen Objekts (2), umfassend:
eine Extrusionseinrichtung (6), welche zum Aufschmelzen eines schäumbaren Extrusionsmaterials eingerichtet ist, wobei eine der Extrusionseinrichtung (6) nachgeschaltet angeordnete oder ausgebildete Austragseinrichtung (7), welche zum Austragen eines vermittels der Extrusionseinrichtung (6) aufgeschmolzenen, schäumbaren oder zumindest teilweise geschäumten Extrusionsmaterials auf einen Untergrund (8) eingerichtet ist, wobei
die Austragseinrichtung (7) zur, insbesondere kontinuierlichen oder diskontinuierlichen, Einstellung wenigstens eines das Aufschäumverhalten eines auf einen Untergrund (8) aufzutragenden schäumbaren oder zumindest teilweise geschäumten Extrusionsmaterials beeinflussenden Parameters eingerichtet ist, wobei die Extrusionseinrichtung (6) und die Austragseinrichtung (7) strömungstechnisch miteinander verbunden sind, derart, dass vermittels der Extrusionseinrichtung (6) aufgeschmolzenes Extrusionsmaterial von der Extrusionseinrichtung (6) in die Austragseinrichtung (7) strömen kann, um über die Austragseinrichtung (7) auf einen Untergrund ausgetragen bzw. aufgebracht werden zu können, **dadurch gekennzeichnet, dass** die Austragseinrichtung (7) eingerichtet ist, einen die Austragsgeschwindigkeit des auf einen Untergrund aufzutragenden schäumbaren oder zumindest teilweise geschäumten Extrusionsmaterials betreffenden Parameters einzustellen, wobei die Austragseinrichtung (7) wenigstens eine düsenartige bzw. - förmige Ausströmöffnung (7.3) umfasst, über welche Extrusionsmaterial auf einen Untergrund austragbar bzw. aufbringbar ist, und wobei die Austragseinrichtung (7) als eine in wenigstens einem Förderparameter, insbesondere der Fördergeschwindigkeit, variierbare Fördereinrichtung (7.4) ausgebildet ist oder eine solche umfasst, wobei die Fördereinrichtung (7.4) als eine Pumpeneinrichtung ausgebildet ist oder eine solche umfasst.

2. Vorrichtung nach Anspruch 1, **dadurch gekennzeichnet, dass** die Fördereinrichtung (7.4) als eine Zahnradpumpeneinrichtung ausgebildet ist oder eine solche umfasst.

3. Vorrichtung nach einem der vorhergehenden Ansprüche, **dadurch gekennzeichnet, dass** die Austragseinrichtung (7) eingerichtet ist, einen die Temperatur des vermittels der Extrusionseinrichtung (6) aufgeschmolzenen schäumbaren Extrusionsmaterials auf einen Untergrund (8) betreffenden Parameter einzustellen.

4. Vorrichtung nach Anspruch 3, **dadurch gekennzeichnet, dass** die Austragseinrichtung (7) eine in wenigstens einem Temperierparameter, insbesondere der in das auf einen Untergrund (8) aufbringbare bzw. aufzubringende Extrusionsmaterial einbringbaren Wärmemenge, variierbare Temperiereinrichtung (7.5) ausgebildet ist oder eine solche umfasst.

5. Vorrichtung nach einem der vorhergehenden Ansprüche, **dadurch gekennzeichnet, dass** die Austragseinrichtung (7) eingerichtet ist, einen den Aufschäumgrad des vermittels der Extrusionseinrichtung (6) aufgeschmolzenen schäumbaren Extrusionsmaterials auf einen Untergrund (8) betreffenden Parameter einzustellen.

6. Vorrichtung nach Anspruch 5, **dadurch gekennzeichnet, dass** die Austragseinrichtung (7) eine in wenigstens einem Schäumparameter, insbesondere einer in das auf einen Untergrund (8) aufbringbare bzw. aufzubringende Extrusionsmaterial einbringbaren Treibmittelmenge, variierbare Schäumeinrichtung (7.6) ausgebildet ist oder eine solche umfasst.

7. Vorrichtung nach einem der vorhergehenden Ansprüche, **gekennzeichnet durch** eine der Austragseinrichtung (7) zuordenbare oder zugeordnete Steuer- oder Regeleinrichtung (9), welche zur Steuerung oder Regelung wenigstens eines Betriebsparameters zumindest der Austragseinrichtung (7), insbesondere im Hinblick auf wenigstens ein Zielkriterium, eingerichtet ist, wobei das Zielkriterium insbesondere eine bestimmte Schaumstruktur des durch Austragen des Extrusionsmaterials auf einen Untergrund (8) ausbildbaren oder ausgebildeten zumindest abschnittsweise geschäumten dreidimensionalen Objekts (2) betrifft.

8. Vorrichtung nach einem der vorhergehenden Ansprüche, **gekennzeichnet durch** eine Erfassungseinrichtung (10), welche zur Erfassung wenigstens eines chemischen und/oder physikalischen und/oder geometrischen Parameters des über die Austragseinrichtung (7) auf einen Untergrund (8) austragbaren oder ausgetragenen Extrusionsmaterials und zur Erzeugung einer einen erfassten chemischen und/oder physikalischen und/oder geometrischen Parameters des über die Austragseinrichtung (7) auf einen Untergrund (8) austragbaren oder ausgetragenen Extrusionsmaterials beschreibenden Erfassungsinformation eingerichtet ist.

9. Vorrichtung nach Anspruch 7 und 8, **dadurch gekennzeichnet, dass** die Steuer- oder Regeleinrichtung (9) eingerichtet ist, den Betrieb zumindest der Austragseinrichtung (7) auf Grundlage einer entsprechenden Erfassungsinformation zu steuern oder zu regeln.

10. Vorrichtung nach einem der vorhergehenden Ansprüche, **dadurch gekennzeichnet, dass** die Austragseinrichtung (7) wenigstens eine, in ihrer Querschnittsgeometrie variierbare Austragsöffnung (7.3) umfasst.

11. Vorrichtung nach einem der vorhergehenden Ansprüche, **dadurch gekennzeichnet, dass** die Austragseinrichtung (7) als modulartige bzw. - förmige, gegebenenfalls nachrüstbare, Funktionskomponente der Vorrichtung (1) ausgebildet ist.

12. Vorrichtung nach einem der vorhergehenden Ansprüche, **dadurch gekennzeichnet, dass** die Austragseinrichtung (7) unmittelbar oder mittelbar, d. h. insbesondere unter Zwischenschaltung wenigstens eines die Extrusionseinrichtung (6) strömungstechnisch mit der Austragseinrichtung (7) verbindendes Verbindungselement (11), indirekt an einen Ausgangsöffnung der Extrusionseinrichtung (6) angeschlossen ist.

13. Verfahren zur extrusionsbasierten Herstellung eines wenigstens eines zumindest abschnittsweise geschäumten dreidimensionalen Objekts (2) unter Verwendung wenigstens einer Vorrichtung (1) nach einem der vorhergehenden Ansprüche, **gekennzeichnet durch** die Schritte:
- Aufschmelzen eines schäumbaren Extrusionsmaterials, insbesondere vermittels einer Extrusionseinrichtung (6);
- Austragen des aufgeschmolzenen schäumbaren Extrusionsmaterials auf einen Untergrund (8), insbesondere vermittels einer der Extrusionseinrichtung (6) nachgeschaltet angeordneten oder ausgebildeten Austragseinrichtung (7); und
- Einstellen wenigstens eines das Aufschäumverhalten auf einen Untergrund (8) aufzutragenden schäumbaren oder zumindest teilweise geschäumten Extrusionsmaterials betreffenden Parameters, insbesondere vermittels der Austragseinrichtung (7).

## Claims

1. Device (1) for extrusion-based production of at least one at least partially foamed three-dimensional object (2), comprising:
an extrusion device (6) which is set up for melting a foamable extrusion material, wherein
one of the extrusion means (6) downstream arranged or formed discharge means (7) is present, which is arranged for discharging by means of the extrusion means (6) melted, foamable or at least partially foamed extrusion material on a substrate (8), wherein
the discharge device (7) for, in particular continuous or discontinuous, setting at least one of the foaming behavior of a foamable or at least partially foamed extrusion material to be applied to a substrate (8) parameter is arranged, wherein the extrusion device (6) and the discharge device (7) are flow-related to each other, such that by means of the extrusion device (6) melted extrusion material can flow from the extrusion device (6) into the discharge device (7) to be discharged or applied to a substrate via the discharge device (7),
**characterized in that** the discharge device (7) is configured to adjust a the discharge speed of the foamable or at least partially foamed extrusion material to be applied to a substrate parameter, wherein the discharge device (7) comprises at least one nozzle-like or -shaped outlet opening (7.3), via which extrusion material can be discharged or applied to a substrate, and wherein the discharge device (7) is designed as a variable conveying device (7.4) in at least one conveying parameter, in particular the conveying speed, or comprises one, wherein the conveying device (7.4) is designed as a pumping device or comprises one.

2. Device according to claim 1, **characterized in that** the conveying device (7.4) is designed as or comprises a gear pump device.

3. Device according to one of the preceding claims, **characterized in that** the discharge device (7) is equipped to adjust a the temperature of the melted by means of the extrusion device (6) foamable extrusion material on a substrate (8) relevant parameter.

4. Device according to claim 3, **characterized in that** the discharge device (7) a variable temperature control device (7.5) is formed in at least one temperature control parameter, in particular the amount of heat that can be applied to a substrate (8) or to be applied extrusion material or comprises such.

5. Device according to one of the preceding claims, **characterized in that** the discharge device (7) is equipped to adjust a foaming degree of the foamable extrusion material melted by means of the extrusion device (6) to a substrate (8) relevant parameter.

6. Device according to claim 5, **characterized in that** the discharge device (7) a variable foaming device (7.6) is formed in at least one foaming parameter, in particular a quantity of propellant that can be applied to a substrate (8) or to be applied extrusion material, or comprises such.

7. Device according to one of the preceding claims, **characterized by** one of the discharging device (7) assignable or associated control or regulating device (9), which is set up for controlling or regulating at least one operating parameter of at least the discharging device (7), in particular with regard to at least one target criterion, wherein the target criterion in particular relates to a certain foam structure of the by discharging the extrusion material on a substrate (8) formed or formed at least partially foamed three-dimensional object (2).

8. Device according to one of the preceding claims, **characterized by** a detection device (10), which is set up for detecting at least one chemical and/or physical and/or geometric parameter of the extrusion material that can be discharged or discharged via the discharge device (7) on a substrate (8) and for generating a detected chemical and/or physical and/or geometric parameter of the detection information that can be discharged or discharged via the discharge device (7) on a substrate (8).

9. Device according to claim 7 and 8, **characterized in that** the control or regulating device (9) is set up to control or regulate the operation of at least the discharge device (7) on the basis of a corresponding detection information.

10. Device according to one of the preceding claims, **characterized in that** the discharge device (7) comprises at least one discharge opening (7.3) that can be varied in its cross-sectional geometry.

11. Device according to one of the preceding claims, **characterized in that** the discharge device (7) is formed as a modular or -shaped, optionally retrofittable, functional component of the device (1).

12. Device according to one of the preceding claims, **characterized in that** the discharge device (7) directly or indirectly, i.e. in particular by interconnecting at least one of the extrusion device (6) flow-technically connecting to the discharge device (7) connecting connecting element (11), is indirectly connected to an output opening of the extrusion device (6).

13. Method for extrusion-based production of at least one at least partially foamed three-dimensional object (2) using at least one device (1) according to one of the preceding claims, **characterized by** the steps:
- melting of a foamable extrusion material, in particular by means of an extrusion device (6);
- discharging of the melted foamable extrusion material on a substrate (8), in particular by means of one of the extrusion device (6) downstream arranged or formed discharge device (7); and
- Setting at least one parameter concerning the foaming behaviour on a substrate (8) to be applied foamable or at least partially foamed extrusion material, in particular by means of the discharge device (7).

## Revendications

1. Dispositif (1) pour la fabrication par extrusion d'au moins un objet tridimensionnel (2) expansé au moins par sections, comprenant:
un dispositif d'extrusion (6) conçu pour faire fondre un matériau d'extrusion moussable, dans lequel:
un dispositif de déchargement (7), disposé ou formé en aval du dispositif d'extrusion (6), est prévu pour décharger sur un support (8) un matériau d'extrusion fondu, moussable ou au moins partiellement moussé au moyen du dispositif d'extrusion (6), étant entendu que:
le dispositif d'extrusion (7) est conçu pour régler, notamment en continu ou en discontinuité, au moins un paramètre influençant le comportement de moussage d'un matériau d'extrusion moussant ou au moins partiellement moussé à appliquer sur un support (8), le dispositif d'extrusion (6) et le dispositif d'extrusion (7) étant reliés par un système d'écoulement, de telle sorte que le matériau d'extrusion fondu (6) puisse passer du dispositif d'extrusion (6) au dispositif d'extrusion (7) pour être épandu ou appliqué sur un support par le dispositif d'extrusion (7),
**caractérisé en ce que** le dispositif d'extraction (7) est équipé pour régler un paramètre relatif à la vitesse d'extraction du matériau d'extrusion moussant ou au moins partiellement moussé à appliquer sur un support, le dispositif d'extraction (7) comprenant au moins un orifice d'évacuation en forme de buse ou de forme (7.3) par lequel le matériau d'extrusion peut être transporté ou appliqué sur un support, et le dispositif d'extraction (7) étant conçu ou comprenant un dispositif d'extraction variant en un ou plusieurs paramètres de transport, notamment la vitesse de transport (7.4), le dispositif d'extraction (7.4) étant conçu ou comprenant un dispositif de pompage.

2. Dispositif selon la revendication 1, **caractérisé en ce que** le dispositif de convoyage (7.4) est conçu comme un dispositif de pompe à engrenages ou comprend un tel dispositif.

3. Dispositif selon l'une quelconque des revendications précédentes, **caractérisé en ce que** le dispositif de déchargement (7) est équipé pour régler un paramètre relatif à la température du matériau d'extrusion expansible fondu au moyen du dispositif d'extrusion (6) sur un support (8).

4. Dispositif selon la revendication 3, **caractérisé en ce que** le dispositif de déchargement (7) est constitué d'une quantité de chaleur pouvant être introduite dans au moins un paramètre de thermorégulation, en particulier dans le matériau d'extrusion pouvant être appliqué ou à appliquer sur un support (8), d'un dispositif de thermorégulation variable (7.5) ou comprend un tel dispositif.

5. Dispositif selon l'une quelconque des revendications précédentes, **caractérisé en ce que** le dispositif d'extraction (7) est équipé pour régler sur un support (8) un paramètre relatif au degré de mousse du matériau d'extrusion moussable fondu au moyen du dispositif d'extrusion (6).

6. Dispositif selon la revendication 5, **caractérisé en ce que** le dispositif de décharge (7) est constitué d'une quantité d'agent propulseur pouvant être introduite dans au moins un paramètre de mousse, en particulier dans le matériau d'extrusion pouvant être appliqué ou à appliquer sur un support (8), d'un dispositif de mousse variable (7.6) ou comprend un tel dispositif.

7. Dispositif selon l'une quelconque des revendications précédentes, **caractérisé par** un dispositif de commande ou de régulation (9) attribuable ou affecté au dispositif de déchargement (7), qui est mis en place pour commander ou régler au moins un paramètre de fonctionnement du dispositif de déchargement (7), en particulier en ce qui concerne au moins un critère cible, le critère cible concernant notamment une certaine structure en mousse de l'objet tridimensionnel (2) formé ou formé au moins une partie de celui-ci, qui peut être formé ou formé en déposant le matériau d'extrusion sur un support (8)

8. Dispositif selon l'une quelconque des revendications précédentes, **caractérisé par** un dispositif de détection (10) conçu pour saisir au moins un paramètre chimique et/ou physique et/ou géométrique du matériau d'extrusion déplaçable ou déchargé sur un support (8) par l'intermédiaire du dispositif de déchargement (7) et pour produire des informations descriptives d'un paramètre chimique et/ou physique et/ou géométrique du matériau d'extrusion déplaçable ou déchargé sur un support (8) par l'intermédiaire du dispositif de déchargement (7).

9. Dispositif selon la revendication 7 et 8, **caractérisé en ce que l'installation** de commande ou de régulation (9) est équipée pour commander ou réguler le fonctionnement d'au moins l'installation de déchargement (7) sur la base d'informations d'enregistrement correspondantes.

10. Dispositif selon l'une quelconque des revendications précédentes, **caractérisé en ce que** le dispositif de déchargement (7) comprend au moins un orifice de déchargement (7.3) variable dans sa géométrie transversale.

11. Dispositif selon l'une quelconque des revendications précédentes, **caractérisé en ce que** le dispositif de déchargement (7) est conçu comme un composant fonctionnel modulaire ou en forme, éventuellement évolutif, du dispositif (1).

12. Dispositif selon l'une quelconque des revendications précédentes, **caractérisé en ce que** le dispositif de déchargement (7) est raccordé directement ou indirectement, c'est-à-dire notamment par interposition d'au moins un élément de liaison (11) reliant techniquement le dispositif d'extrusion (6) au dispositif de déchargement (7), à un orifice de sortie du dispositif d'extrusion (6).

13. Procédé de fabrication par extrusion d'au moins un objet tridimensionnel (2) expansé au moins par sections, utilisant au moins un dispositif (1) selon l'une quelconque des revendications précédentes, **caractérisé par** les étapes suivantes:
- la fusion d'un matériau d'extrusion moussable, notamment au moyen d'un dispositif d'extrusion (6);
- Déchargement du matériau d'extrusion moussable fondu sur un support (8), notamment au moyen d'un dispositif d'extrusion (7) disposé ou formé en aval du dispositif d'extrusion (6); et
- Réglage d'au moins un paramètre relatif au comportement au moussage d'un matériau d'extrusion moussable ou au moins partiellement moussable à appliquer sur un support (8) notamment au moyen du dispositif de déchargement (7).
